(19)

**Europäisches Patentamt**

**European Patent Office**

**Office européen des brevets**

(11) **EP 2 791 745 B1**

(12) **EUROPEAN PATENT SPECIFICATION**

(45) Date of publication and mention
of the grant of the patent:
**09.09.2020 Bulletin 2020/37**

(21) Application number: **11877379.5**

(22) Date of filing: **15.12.2011**

(51) Int Cl.:
*G05B 17/02* $^{(2006.01)}$    *G05B 23/02* $^{(2006.01)}$

(86) International application number:
**PCT/FI2011/051112**

(87) International publication number:
**WO 2013/087972 (20.06.2013 Gazette 2013/25)**

(54) **A METHOD OF OPERATING A PROCESS OR MACHINE**

VERFAHREN ZUM BETRIEB EINES VERFAHRENS ODER EINER MASCHINE

PROCÉDÉ DE FONCTIONNEMENT D'UN PROCÉDÉ OU D'UNE MACHINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.10.2014 Bulletin 2014/43**

(73) Proprietor: **Valmet Automation Oy
02150 Espoo (FI)**

(72) Inventors:
• **PAUNONEN, Hannu
FI-33560 Tampere (FI)**
• **HAPPONEN, Harri
FI-37120 Nokia (FI)**

• **FRIMAN, Mats
FI-33240 Tampere (FI)**
• **HARJU, Timo
FI-02600 Espoo (FI)**

(74) Representative: **Kolster Oy Ab
(Salmisaarenaukio 1)
P.O. Box 204
00181 Helsinki (FI)**

(56) References cited:
WO-A2-2007/147166      WO-A2-2007/147166
WO-A2-2009/120362      WO-A2-2009/120362
US-A1- 2007 288 105    US-A1- 2011 295 407
US-A1- 2011 295 407    US-B1- 6 941 287
US-B1- 6 941 287

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## EP 2 791 745 B1

**Description**

FIELD OF THE INVENTION

The present invention relates generally to control of technical processes and machines.

BACKGROUND OF THE INVENTION

A process control or automation system is used to automatically control an industrial process such as chemical processes, oil refineries, power plants, timber industry, mineral processing (e.g. rock-crushing, screening, grinding, etc.), and paper and pulp factories. The process automation system often uses a network to interconnect sensors, controllers, operator terminals and actuators. Process automation involves using computer technology and software engineering to help power plants and factories operate more efficiently and safely. An automatic controller must be able to facilitate the plant operation over a wide range of operating conditions. Also many machines, such as crushers, screens, wood harvesters, etc., are very complicated systems with a plurality of sensors, controllers, and actuators.

The industrial processes maintain continuous operations in facilities that represent substantial start-up costs and time, but can be interrupted or disrupted by minor disturbances. If the product stream is disrupted or the process is not run optimally, lost productivity and lost product can create a large financial burden. Therefore it is important for the operator to monitor and supervise the process in real-time. Control rooms are central facilities used to manage large systems such as industrial processes. As the operators of large systems are asked to perform more efficiently, use more sophisticated control systems, and take on more duties and responsibilities, developers of control room equipment have sought to improve operators' ability to interact effectively with their systems. Various approaches have been proposed, which are often divided, according to the level of knowledge, into model-based and statistical methods.

Behaviour of a process can be predicted using simulation models. Process simulation is a model-based representation of industrial processes and unit operations in software for studying and analyzing the behaviour and performance of actual or theoretical systems. Simulation studies are performed, not on the real-world system, but on a (usually computer-based) model of the system created for the purpose of studying certain system dynamics and characteristics. The purpose of any model is to enable its users to draw conclusions about the real system by studying and analysing the model response. The major reasons for developing a model, as opposed to analysing the real system, include economics, unavailability of a "real" system, and the goal of achieving a deeper understanding of the relationships between the elements of the system. In process automation, the simulator may use measurements to show not only how the plant is working but to simulate different operating modes and find the optimal strategy for the plant.

Modern process plants generate a vast amount of real-time data that often has to be stored and processed efficiently for later analysis. All measurements, setpoints, controller outputs, device statuses, motor starts, alarms, operation tracking etc. may be stored into so called historian databases. A historian database may be integrated with other parts of a control system, such as controls, engineering and control room functionalities. By means of the history data collected from the process plant over time, trend charts can be created that show process trends in data over time. In modern control rooms, long history trends are usually available for the users. As all processes vary, single point measurements can be misleading. Displaying historical data over time increases understanding of the real performance of a process.

US 2002177909 discloses a multi-variable control loop assessment method and apparatus for analyzing, assessing and troubleshooting control loops in complex industrial processes such as papermaking operations. A multivariable analysis tool applies an orthogonal decomposition method such as the Partial Least Squares (PLS) to a disturbance model relating the known loop disturbances to the loop model residue. The tool first extracts the most dominant correlation to the loop model residue and then uses the residue to search for secondary dominant correlation in an orthogonal space. This process is repeated until no further output variation can be significantly attributed by the next dominant correlation. In this way, the analysis tool is able to estimate the performance potential of each control loop under different disturbance conditions and provide a control performance index by comparing the achieved performance to the performance potential in a multi-variable environment. This index indicates whether or not a given loop is under optimal operation and, in fact, shows the variance of the loop from the best achievable loop performance. A problem with PLS (Partial Least Squares Regression), as well as with PCA (Principal Component Analysis) and Factor Analysis is that these methods are linear methods. Moreover, latent variables are quite abstract and therefore difficult to explain for many purposes, and it is difficult to select proper variables to the models used.

In WO2008040845 the quality of the paper produced by a paper machine is monitored by profile measurements of the paper web. The profile-measurement information is combined with other process measurements, with the aid of correlation calculation. In the calculation, the period of time in which some parameter has changed significantly is examined. By calculating the correlations between parameter time series and the process measurements, the process measurements are found that correlate most strongly with the parameter and which thus have most probably influenced the profile change. A problem related to such correlation matrix method is that it is a linear method and may provide misleading results for nonlinear relationships. Moreover, if a correlation matrix is used as criteria for modelling, wrong or confusing results may be obtained.

Non-linear models have not been employed because they are complicated and require very much processing capacity and extremely long processing times even if there are only a handful of variables.

Real-life management and up-keeping challenges of a process monitoring and diagnosis are also discussed in "Managing Adaptive Process Monitoring: New Tools and Case Examples", Mats Friman and Harri Happonen, Proceedings of the 15th Mediterranean Conference on Control and Automation, July 27-29, Athens, Greece, 2007.

US2007/288105 discloses a a technology for processing data to extract significant factors based on relation between data by determining a plurality of explanatory variables that have great effect on an objective value.

There is a need for a monitoring and diagnosis tool which allows an easy identification of process parameters affecting on process problem, or productivity or efficiency of the process, and making appropriate control actions based on the identified parameters. There is also need for a method which allows the operator to evaluate non-linear relationships of parameters with the monitoring and diagnosis tool.

SUMMARY OF THE INVENTION

An object of the present invention is to provide a new operating tool which can assist an operator of a process or machine in decision making. This object of the invention is achieved by the subject matter of the attached independent claims. The preferred embodiments of the invention are disclosed in the dependent claims.

An aspect of the invention is a method of operating a process or a machine, comprising

obtaining operating data from an operating historian database, said operating data containing a plurality of variables collected from a process or machine during operation,

determining, by non-real time processing, statistical models, each of the statistical models describing non-linear causal interrelations between two or more of said variables,

organizing, by a non-real time processing, a plurality of operating variables into a hierarchical presentation of said statistical models according a statistical criterion, in which hierarchical presentation the models are connected to each other through said variables, and storing said hierarchical presentation of statistical models in a database,

receiving, via a graphical human-machine interface of the process or machine, a selection of one of said plurality of variables as a variable of interest for real-time analysis,

selecting, by real-time processing based on said stored hierarchical presentation of statistical models, among said plurality of variables of the collected process data at least one explanatory variable which has the largest impact on said variable of interest in terms of said statistical criterion, and

analyzing and displaying on said graphical human-machine interface relationships between said variable of interest and said at least one explanatory variable.

Another aspect of the invention is a method of operating a process or a machine, comprising

obtaining operating data from an operating historian database, said operating data containing a plurality of variables collected from a process or machine during operation,

determining, by non-real time processing, a collection of statistical models, each of the models describing non-linear causal interrelations between two or more of said variables, and storing said collection of statistical models in a database,

receiving, via a graphical human-machine interface of the process or machine, a selection of one of said plurality of variables as a variable of interest for real-time analysis,

dynamically organizing, by a real time processing, variable-specific hierarchical presentation of statistical models from the statistical models of the stored model collection for analysis of said variable of interest,

selecting, by real-time processing based on said variable specific hierarchical presentation of statistical models, among said plurality of variables of the operating data at least one explanatory variable which has the largest impact on said variable of interest in terms of said statistical criterion, and

analyzing and displaying on said graphical human-machine interface relationships between said variable of interest and said at least one explanatory variable.

According to an embodiment of the invention said analyzing of said relationship information comprises displaying, at a graphical human-machine interface, a presentation of said variable of interest in function of said at least one explanatory variable.

According to an embodiment of the invention said analyzing of said relationship information comprises displaying, at said graphical human-machine interface, a hierarchical variable presentation having said variable of interest at a root and said at least one explanatory variable at a branch.

According to an embodiment of the invention the method comprises the operator manually adjusting, during the analysis at said graphical human-machine interface, said at least one explanatory variable by one or more of: removing one or more of said at least one explanatory variable from the analysis; locking one or more of said at least one explanatory variable to a certain value or range of values; and setting an allowed direction of change of one or more of said at least one explanatory variable and said variable of interest.

According to an embodiment of the invention said non-real time processing comprises automatically building several hierarchical presentations of statistical models, wherein variables to said statistical models are selected among said plurality of variables based on a page hierarchy of the graphical human-machine interface.

According to an embodiment of the invention the method comprises

analyzing a predicted impact of said at least one explanatory variable and said variable of interest on each other using said hierarchical presentation or presentations of statistical models,

showing the impact in a numerical and/or graphical form at the graphical human-machine interface.

According to an embodiment of the invention said analyzing of said relationship information comprises displaying, at said graphical human-machine interface, a predicted value of the variable of interested, calculated with said hierarchical presentation or presentations of statistical models, when said at least one explanatory variable varies in value.

According to an embodiment of the invention said analyzing of said relationship information comprises

varying, via said graphical human-machine interface, one or more of said at least explanatory variables,

displaying, at said graphical human-machine interface, a predicted value or range of values of the process output variable calculated using said hierarchical presentation or presentations of statistical models.

According to an embodiment of the invention the method further comprises

selecting an explanatory variable that, together with already selected explanatory variable or variables, if any, best describe the selected process output variable in terms of said statistical criterion of the variable of interest, and

sequentially repeating the selection step until a predetermined stopping criterion is met.

According to an embodiment of the invention the method further comprises

calculating the statistical criterion of the variable of interest,

calculating, for each of said plurality of variables, the impact between the respective variable alone and the variable of interest in terms of the statistical criterion of the variable of interest,

selecting as a primary explanatory variable the one of said plurality of variables that best describes the variable of interest in terms of the statistical criterion,

calculating, for each remaining one of said plurality of variables, the impact between the respective variable, together with already selected primary explanatory variable, and the variable of interest in terms of the statistical criterion,

selecting as a further explanatory variable the one of said plurality of variables, if any, that together with already selected primary explanatory variable, best describes the variable of interest in terms of the statistical criterion,

sequentially repeating the selection step until a predetermined stopping criterion is met.

According to an embodiment of the invention said statistical criterion is entropy or relative entropy.

According to an embodiment of the invention said statistical models comprise multi-dimensional histogram models.

According to an embodiment of the invention the method further comprises

controlling, through said graphical human-machine interface, said variable of interest in the industrial process by adjusting one or more of said at least one explanatory variable based on information obtained from said analysis.

A further aspect of the invention is a system for implementing any one of method embodiments of the invention.

A further aspect of the invention is a computer program comprising program code for performing any one of method embodiments of the invention, when said program is run on a computer.

A further aspect of the invention is program code means stored on a computer readable medium for performing any one of method embodiments of the invention, when said program product is run on a computer.

BRIEF DESCRIPTION OF THE DRAWINGS

In the following the invention will be described in greater detail by means of exemplary embodiments with reference to the attached drawings, in which

Figure 1 is a block diagram illustrating a system according to an exemplary embodiment of the invention;
Figure 2 is a flow diagram illustrating an operation of a tool according to an exemplary embodiment of the invention;
Figure 3 is a flow diagram illustrating an exemplary entropy-based selection method for determining variables related to a selected variable of interest;
Figure 4 is a flow diagram illustrating an exemplary entropy-based tree model construction method;
Figures 5A, 5B and 5C illustrate a multi-dimensional histogram, a normalized probability distribution of temperature, and a normalized distribution of month, respectively;
Figures 6A-6F illustrate exemplary constructions of a tree structure;
Figure 7A illustrates a model collection;
Figure 7B illustrates an example of a dynamic construction of a variable-specific tree;

Figure 8 is an exemplary functional block diagram which illustrates functional blocks for implementing an interactive user interface;

Figures 9A, 9B, 9C and 9D show examples of user interface views in a first example application;

Figures 9E and 9F show a graph and a histogram of the Kappa reduction, respectively;

Figures 10A, 10B, 10C, 10D, 10E and 10F show examples of user interface views in a second example application;

Figures 11A, 11B, 11C, 11D, 11E, 11F and 11G show examples of user interface views in a third example application;

Figures 12A, 12B, 12C, 12D and 12E show examples of user interface views in a fourth example application; and

Figure 13 shows an example of a hierarchical page structure of a user interface.

## EXAMPLE EMBODIMENTS OF THE INVENTION

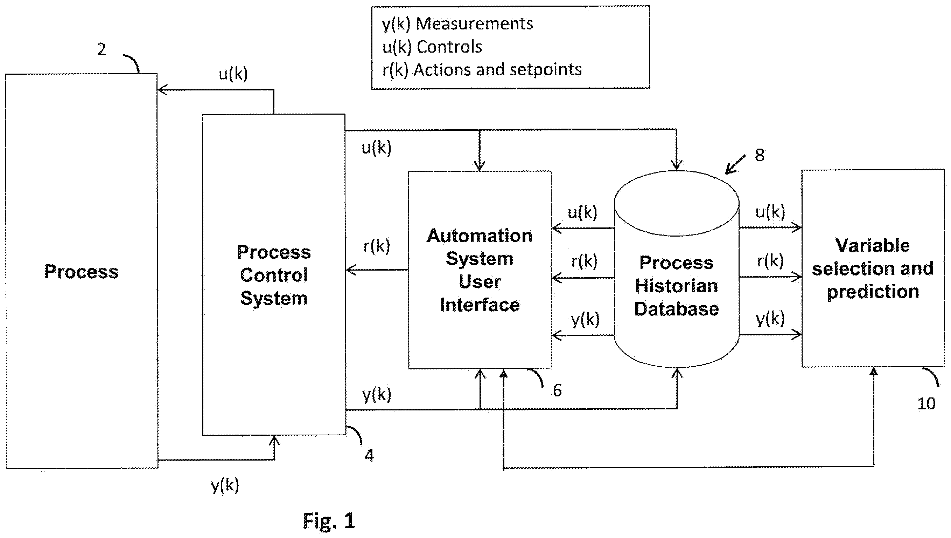

An exemplary embodiment of the invention is illustrated in Figure 1. The present invention can be applied in connection with any computer-aided control or operating system 4, such as automation system (process control system), and any technical process 2, such as industrial process or the like. The technical processes 2 may include, but are not limited to, processes in a processing industry, such as pulp and paper, oil refining, petrochemical and chemical industries, or processes in power plants, processes in timber industry, mineral processing (e.g. rock-crushing, screening, grinding, etc.), operation of processing machines, etc. In the following, the invention is illustrated with exemplary embodiments without restricting the invention to any of the control systems and processes described in these exemplary embodiments.

Referring again to Figure 1, there are various architectures for an automation system. For example, the automation system 4 may be a Direct Digital Control (DDC) system, a Distributed Control System (DCS), or Field Control System (FCS), all well known in the art. One example of such a decentralized automation system is Metso DNA (DNA, Dynamic Network of Applications) delivered by Metso. A central processing unit(s) of an automation system controlling the productive activity of an entire factory, such as a paper mill, is (are) often called a control room, which may be composed of one or more control room computer(s)/programs and process control computer(s)/programs as well as databases of an automation system. An automation system 4 may comprise a process bus/network and/or a control room bus/network, by which different process control components or computers are coupled to one another. A control room bus/network may interconnect the user interface components of the automation system 4. A control room bus/network may be a local area network, for example, based on the standard Ethernet technology. A process bus/network may, in turn, interconnect process control components. A process bus/network may be based on a deterministic token passing protocol, for instance. Process controllers may also be connected to a control room network, allowing communication between process controllers and user interfaces. It must be appreciated, however, that it is not the intention to limit the application area of the invention to any specific implementation of an automation system 4.

A process 2 that is controlled by an automation system 4 may typically include a high number of field devices, such as actuators, valves, pumps and sensors, in a plant area (field). There are various alternative ways to arrange an interconnection between an automation system 4 and a process 2 (e.g. field devices), such as two-wire twisted pair loop (4 to 20 mA analog signal), HART (Highway Addressable Remote Transducer) protocol, and other field buses (e.g. Fieldbus and Profibus). However, it is to be appreciated that the type or implementation of an interconnection between an automation system 4 and a process 2, e.g. between a control room and field devices, may be based on any one of the alternatives described above, or on any combination of the same, or on any other implementation. A practical plant configuration may, and typically does, include several types of automation lines or field buses in parallel, since the plant is updated and extended gradually over a long period of time.

Process operating data may include process measurements y(k) process controls u(k), set points r(k), etc., for example. The process measurements y(k) may include any measurement of any desired variables or properties in a process 2, such as a flow rate, a pressure, a temperatureetc. These process variables can be measured with dedicated sensors arranged in the field of a process plant. Process controls (inputs) u(k) from an automation system 4 to a process 2 may include, but are not limited to, control inputs to field devices.

An operator or user may monitor and control the automation system 4 via the user interface 6 of the automation system. Through the user interface user may monitor displayed measurement data y(k) and process controls u(k) received from the automation system 4 and provide actions and setpoints to the automation system 4. In the exemplary embodiment shown in Figure 1, the measurement data y(k), the process controls u(k) and the actions and setpoints r(k) may be stored into database(s) 8, or a portion of the database 8 called historian database(s) 8 . The historian data may include part or all of measurements, setpoints, controller outputs, device statuses, motor starts, alarms, grade information, operation tracking etc. obtained from the automation system and the process during operation. The database 8 may be a database commonly referred to as a tag database, which contains data elements called tags or points. A tag may represent a single input or output value monitored or controlled by the system 4. A tag can be either "hard" or "soft". A hard tag represents an actual input or output within the system 4, while a soft tag results from logic and math operations applied to other points. Tags are normally stored as value-timestamp pairs: a value and the timestamp when it was recorded or calculated. A series of value-timestamp pairs gives the history of that tag. Optionally the history database 8 may store additional metadata with tags, such as alarm information. A history database 8 may store data from a huge amount of tags, e.g. thousands or dozens of thousands over a long period of time (length of the history), the main limiting factor being the storage capacity of the database. The collection cycle for tags, i.e. the time between the collection (sampling) of two samples, may be selectable by the user, e.g. from approximately 0.1 seconds up to days or weeks. There may be different collection cycles and/or history lengths for different tags or different users, for example. The length of the trend history is limited by the available database capacity, e.g. hard disc space. According to an exemplary embodiment, the historian database may be a round buffer i.e. older data is automatically deleted and overwritten if the database reaches its maximum storing capacity.

The operator user interface 6 in a control room may be based on a human-machine interface (HMI) running in the operator console and allowing the user to monitor, supervise and control the process. The aim of the operator user interface is effective operation and control of the plant systems, typically by means of keyboard and mouse controlled displays on which a vast amount of process information is graphically presented (graphical user interface, GUI). The primary aspects of this interface are graphics animated with feedback from the process which aids the operator in making operational decisions, e.g. make actions and change setpoints to operate the process. The operator user interface may also include data browsing and analyzing utilities, configuration tools and alarm display. In steady operation, the operator interface displayed in the main control room may show the synthetic and functional state of the plant system. At one glance, the operator may be able to know the overall state of the plant system - i.e. the global state of all the components. If a problem occurs, the controlled component appears in error and the operator may access its detailed state, for instance opening a display that is specific to the supervised component. This interface may help the operator to locate the origin of the fault and shall suggest a corrective action if possible. In the operator user interface, it is desired that the displayed information should be organized purposefully, in meaningful and useful ways based on clear, consistent models that are apparent and recognizable to operators, putting related things together and separating unrelated things, differentiating dissimilar things and making similar things resemble one another.

In order to provide an improved user interface environment for an operator in a process industry, according to exemplary embodiments of the invention, the user interface is provided with an interactive tool which allows selecting any variable (called "key" variable herein), which is of special interest, at the user interface and determining or selecting which other variables, or combination of variables, out of a large number of variables, have the largest impact on (non-linear relationship with) the key variable. This interactive tool may be used, for example, in a continuous troubleshooting, in order to reveal root causes for quality and runnability problems.

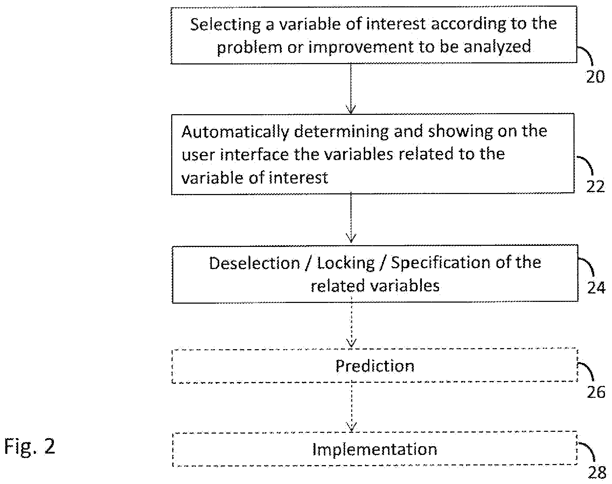

An example of the operation of the tool is illustrated in a flow diagram of Figure 2. The operator has a problem, which needs to be solved, or he wants to improve something, such as quality, efficiency, etc. The tool may be initiated by the operator selecting or providing a key variable, "Variable of Interest", at the user interface (step 20). The variable of interest may usually be an output variable of interest (such as quality, cost, etc.) but it can also be a control value that the operator wants to investigate. At least most significant variables (e.g. the most affecting variables) related to the selected variable of interest are automatically determined by a statistical method and shown at the user interface (step 22). The operator may manually adjust the related variables shown on the interface (step 24): for example, by removing a related variable from analysis, by locking a related variable to an actual value, or by providing the favourable direction of change of the value of a related variable (up or down). The knowledge of significant explanatory variable(s) may be sufficient for the operator in some applications or situations, and the operator may directly utilize the obtained knowledge in controlling of the automation system, for example by changing the value of the explanatory variable and monitoring the effect. In such a case only steps 20, 22, 24 and 28 may be implemented.

However, in many situations and application, such trial-and-error control is not desirable, but the operator would prefer to have more information on how to adjust the explanatory variable(s) obtained. Therefore, in some exemplary embodiments, the impact of one variable to another may be demonstrated by a prediction method and shown in a numerical and/or graphical form at the user interface (step 26). After being satisfied with the result of the analysis, the operator may decide on which is the preferred parameter change(s) in order to overcome the problem in question or achieve the desired improvement, and then implement the corresponding change(s) on the real system via the same user interface (step 28).

According to an exemplary embodiment of the invention, variables related to the selected variable of interest are automatically determined with an entropy-based statistical selection method, i.e. with entropy, or more specifically, relative entropy as a statistical criterion. However, the invention is not limited to use of entropy as a statistical criterion but another statistical criterion may be used as well.

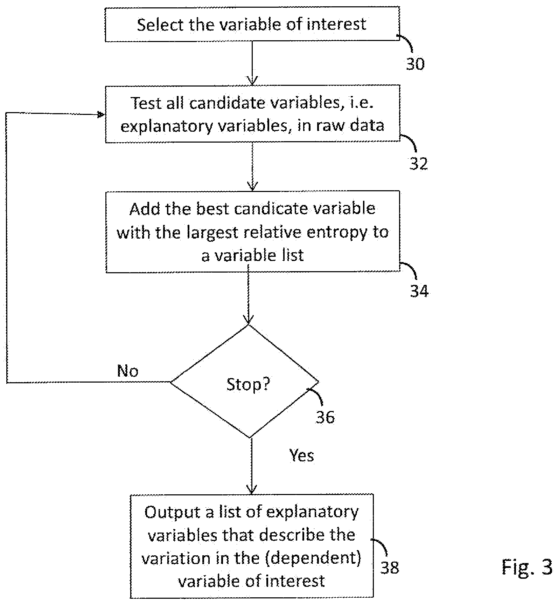

Figure 3 shows a flow diagram illustrating an exemplary entropy-based selection method for determining variables related to a selected variable of interest. First, in step 30, the operator may select the variable of interest among the variables available at the user interface and initiate a selection of related variables. In step 32 all candidate variables, i.e. all explanatory variables among a plurality of variables are tested for entropy based on a raw data, such as process historian data. In other words, it may be evaluated how much each candidate explanatory variable will increase the relative entropy of the variable of interest. In step 34, the best candidate variable, i.e. the one with the largest relative entropy, is added to a list of explanatory variables. In step 35, it is checked whether the calculation is stopped or continued with a new iteration. The stopping criteria may be, for example, that the number of selected explanatory variables on the list has reached the maximum allowed number and/or the relative entropy has not improved since the last iteration. If the stopping criteria are not met, the process proceeds back to step 32. The explanatory variable(s) selected in the previous iteration round(s) is/are included in the next iteration. If the iteration process is stopped, the process proceeds to step 36, wherein a list of explanatory variables that described the variation in the (dependent) variable of interest is outputted, e.g. shown at the user interface.

For example, in monitoring of fan efficiency it is difficult to select variables that best describes the operating point. All candidate variables, i.e. Head, Flow and Wing Angle correlate strongly with each other. With entropy, the following relative entropy changes may be obtained: Head 7.1%; Flow 1.6%; and Wing Angle: 2.2%. The head has the best relative entropy and, therefore, is the candidate variable in this comparison and should be included in the list of explanatory variables of the fan efficiency. With this variable included in the list and in a next iteration round, the next iteration round gives (with the head set to the 7.1 %) following relative entropy changes: Flow 16.7% and Wing Angle 12.6%. Thus, the parameter Flow would be beneficial as a secondary explanatory variable.

Example implementation of a generic procedure for determining a list of explanatory variables for one dependent variable may be:

1. Starting with 1 dependent (output) and $nj$ (usually many) explanatory (input) variables
   1. Continuous variables are discretized (each observation is replaced by an integer variable, indicating set membership)
      1. Each output observation hence belongs to a set $O = (o_1, o_2, ... o_n)$
         1. Entropy of output (Eo) is calculated
         2. Set relative entropy H = 0
      2. The $j^{th}$ input variable observation belongs to a set $I_j = (i_{j1}, i_{j2}, ... i_{jl})$
2. Starting with empty S = () and variable list Vlist = () and a numerical value of relative entropy improvement eps
3. For each input variable j
   1. If S = () then $S_j = I_j$, else $S_j = S \times I_j$ where $S \times I_j$ is Cartesian product of sets S and $I_j$
   2. Construct a contingency table with the sets O as rows and $S_j$ as columns
   3. Calculate entropy of each row and total entropy, i.e. weighted average Ew(j), weighted with number of oservations in row
   4. H(j) = (Ew(j)-Eo)/Eo
4. Select jmax, i.e. variable j with maximum relative entropy so that H(jmax) = max(H(j)),j = 1...nj. Set Hold = H and H = H(jmax) and Vlist = Vlist ∪ jmax
5. Update set S: $S = S \times I_{jmax}$
6. If H-Hold<eps or maximum or nr of variables is reached then go to 7, else go to 3.
7. Output of algorithm is variable list index Vlist

Exemplary embodiments of the invention provide a possibility to statistically suggest variables that cause problems, such as emissions and energy consumption, or runnability problems. In selection of variables a difficulty evolves from the strong mutual correlation between explanatory variables. According to an exemplary embodiment of the invention, only one of these variables with strong mutual correlation is selected, and instead variables with small mutual correlation are selected to a list of explanatory variables. The variable selection by using relative entropy as a measure has the purpose is to select the most representative variables that explain the variation in the variable of interest. Thus, with exemplary embodiments of the invention, in variable selection a large correlation from inputs to output and a small mutual correlation between inputs can be achieved. Exemplary embodiments of the invention also provide a simple method for selection of variables out of numerical data with nonlinear relations. In other words, the selection method is nonlinear, which is an advantage to compared to commonly used multivariable statistical methods like PCA or PLS. First of all, the method is nonlinear. From the user's point of view, no abstract and difficult-to-interpret latent variables are required, but real variables are selected to represent a set of variables with mutual correlation. A selection method according to exemplary embodiments of the invention also allow selection of different types of variables out of numerical data, such as continuous (e.g. temperature, pressure), discrete (e.g. number of shutdowns), and classification variables (e.g. type of product). A selection method according to exemplary embodiments of the invention also enables selection of a large number of variables, while requiring only a restricted calculation capacity. No pre-knowledge of the automation system or no pre-configuration is not necessarily needed, but it is possible to initiate a selection according to exemplary embodiments for any variable of interest at a user interface during online operation of a process.

In exemplary embodiments of the invention, the interactive tool of the user interface may further be provided with a statistical predictor (explorer) for exploring non-linear statistical relationships of variables, which allows the operator to operate the user interface of the automation system against a statistical model. The operator may also initiate an automatic building the statistical predictor, based on a history trend data and an existing configuration data, for example.

The interactive predictor tool may be based on self-organizing stochastic variables to a hierarchical structure, i.e. into a network of models connected through variables, such as a tree, for example. The hierarchical structure may be organized such that variables with high mutual information are closely connected. In exemplary embodiments of the invention, in addition to using a statistical method, e.g. entropy-based method, for variable selection for models as described above, a statistical criterion, such as the entropy, is also used as a basis for construction of the hierarchical structure. In other words, the way the statistical models are attached to the hierarchical structure, such a tree, is based on a statistical criterion, such as entropy.

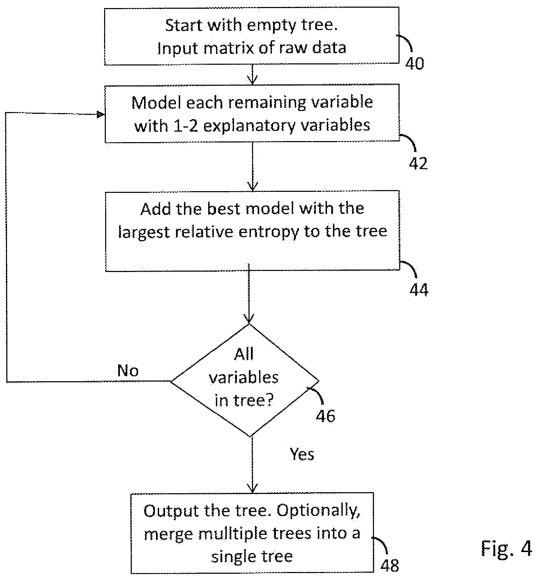

Figure 4 shows a flow diagram illustrating an exemplary entropy-based tree model construction. First, in step 40, a matrix of raw data, where each row is an observation (sampling instant) and each column is a variable, is inputted. The raw data may be, for example, data from the process historian database of the automation system. In step 42, all remaining variables with 1 - 2 explanatory variables are modelled. Due to curse of dimensionality, a model should not contain too many variables. In exemplary embodiments, the number of variables in a model is 2 - 3, but e.g. 4 variables may also be a possible. More variables in a model may require more rich learning data. Relative entropy is used to evaluate the goodness of each model. A greedy selection algorithm may be used to construct a tree. During each iteration round, the best model, i.e. the one with the largest relative entropy, consisting of a variable pair or triple is added to the tree (step 44). The tree structure is conserved, i.e. models that would add cycles (loops) to the tree are rejected. In step 46, it is checked whether all variables are present in the tree. If not, the process proceeds to step 42 for a new iteration round for the remaining variables. If all variables are present in the tree, the tree (i.e. a network of models connected through variables) is outputted (step 48). Optionally, if the steps 42-46 have produced two or more trees which are not connected, there may also be an optional step of merging two or more trees into a single tree (step 48), as will be described below.

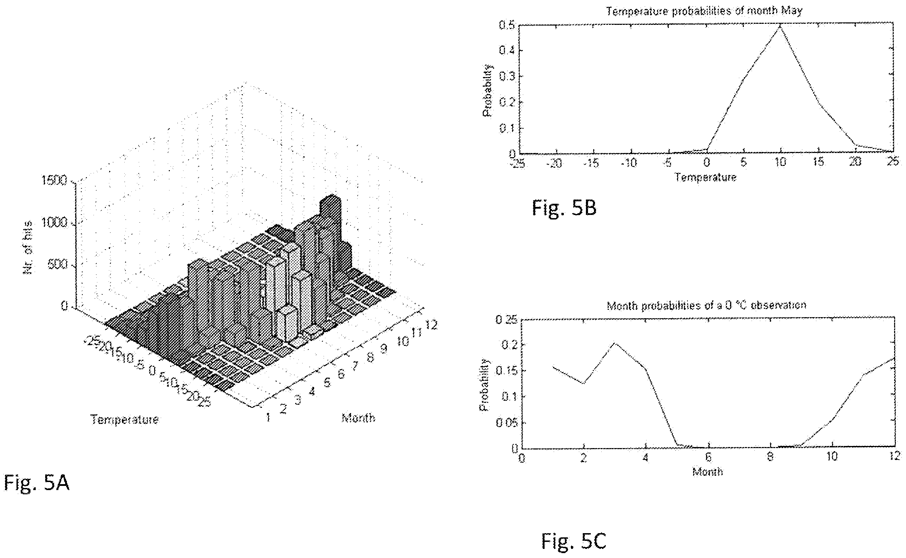

Various statistical methods are suitable for modelling non-linear interrelations between variables in the exemplary embodiments of the invention. These are referred to as statistical models herein. As examples of simple statistical models, multi-dimensional histograms will be discussed below. A histogram is a well-known way of presenting data from one variable. A multi-dimensional histogram is just a histogram in multiple dimensions. As an example data set we will use the daily average outdoor temperature measured in Helsinki during 1951 - 2004. Figure 5A illustrates, as an example, a two dimensional histogram wherein the dimensions are based on the two variables "Temperature" and "Month". The temperature dimension is subdivided into a number of subranges, referred to as bins herein. Similarly the month dimension comprises subranges or bins from 1 to 12, corresponding to months from January to December. The intersections of the subranges of the two dimensions provide two dimensional bins which are represented by the columns of the histogram. Each column of the histogram represents the number of measurements falling in to the respective intersection or bin. A notable difference between the multi-dimensional histogram model and typically employed models is that the output of the multi-dimensional model is a distribution of values rather than a single value. For example, if we have month May as input, we get a one-dimensional temperature histogram as output in the exemplary case of Figure 5A. If the resulting one-dimensional histogram is further normalized, i.e. it is divided with the number of observations, the resulting distribution may be as shown in Figure 5B. This distribution can be interpreted as "The temperature probability in May". In other words, a multi-dimensional histogram model may provide a probability distribution of values of the output variable (the variable of interest) for any input variable. The multi-dimensional histogram model is two-directional model; an input variable and an output variable can change place. For example, if we select the temperature (0 °C, for example) as input in the multi-dimensional histogram shown in Figure 5A, we will get a month distribution (month probabilities of the 0 °C observation) as output as illustrated in Figure 5C. When needed, a distribution can be converted to a single value. For example, the temperature distribution in May can be estimated with the weighted average;" Mean temperature for May is 9.7 °C". An example alternative to weighted average is to select the location of the maximum value of the distribution; "Most probable month for 0 °C observation is March". The latter may be a more suitable method when the task is to figure out a typical month for a selected temperature. Although we have illustrated the multi-dimensional histogram model with two dimensions, is should be appreciated that, similarly, any n-dimensional histogram model can be formed for any number n of variables, wherein n= 2, 3,...It should also be appreciated that instead of multi-dimensional histogram models, other statistical models may be employed to provide a distribution of values of an output variable for one or more input variable based on a data set.

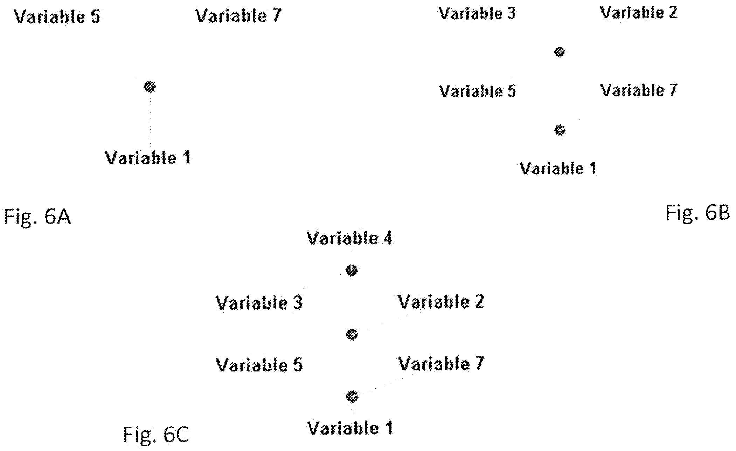

An exemplary construction of a tree structure based on information entropy is illustrated in Figures 6A-6E. We will use a data set which contains eight variables: Variables 1-8. In the first phase, Variable Pairing, we will go through all variables and look for explanatory variables. As a result we will get a list of all variables, with some explanatory variables for each variable. In this example we will use 2 explanatory variables. Each triple (consisting of 1 dependent variable and 2 explanatory variables) is called a submodel. The sub-models are:

| Model | Dependent | Explanatory1 | Explanatory2 |
|---|---|---|---|
| 1 | variable1 | variable5 | variable7 |
| 2 | variable2 | variable3 | variable1 |
| 3 | variable3 | variable2 | variable5 |
| 4 | variable4 | variable3 | variable1 |
| 5 | variable5 | variable3 | variable1 |
| 6 | variable6 | variable4 | variable5 |
| 7 | variable7 | variable1 | variable5 |
| 8 | variable8 | variable3 | variable4 |

The next task before building the tree is to decide in which order the submodels are connected. The tree is built by connecting submodels, consisting of 2-3 variables to the tree. A model that would cause a cycle cannot be attached to the tree. Therefore, the order of connecting submodels, is important. During phase 1 described above, we will get (in addition to the explanatory variables) the entropy based goodness of the model. As discussed before, the variable which results in the largest change of relative entropy is selected as explanatory variable. This value may also be a measure of the goodness of the model. In this case, when we use two explanatory variables, we get two goodness values: 1) goodness of a model with one explanatory variable (hr1), and 2) goodness of a model with two explanatory variables (hr2). The values, sorted according to hr2, are:

| Model | Dependent | hr1 | hr2 |
|---|---|---|---|
| 2 | variable2 | 0.85101 | 0.76499 |
| 3 | variable3 | 0.74763 | 0.60894 |
| 5 | variable5 | 0.63089 | 0.55538 |
| 1 | variable1 | 0.5989 | 0.41509 |
| 4 | variable4 | 0.58079 | 0.4832 |
| 8 | variable8 | 0.41113 | 0.33764 |
| 6 | variable6 | 0.29695 | 0.20022 |
| 7 | variable7 | 0.23231 | 0.1422 |

Since cycles are not tolerated, we may be forced to leave out explanatory variables during connection. It is therefore useful to consider using only one explanatory variable whenever possible. If a submodel is well modelled with only one explanatory variable, we can add this submodel to the tree at a later stage. For example, the variable variable2 is described with the following explanatory variable with goodness (hr1):
EV1:variable3, hr1 = 0.76499
With two explanatory variables we will get (variables and goodness hr2):
EV1 :variable3, EV2:variable1 , hr2 = 0.85101
As seen, the goodness does not improve much with two explanatory variables as compared to one explanatory variable. For this submodel it would hence be reasonable to connect this submodel at a later stage, and use the second explanatory only if it has not already been connected, i.e. it will not add cycles to the tree.
The justification of using 2 explanatory variables is calculated as

$$c_2 = \frac{h_{r2} - h_{r1}}{h_{r2}}$$

where hr1 and hr2 are the relative entropy changes (goodness of models) with one and two explanatory variables, respectively.
To summarize, the connection order may be decided based on

1) The goodness of models (with two explanatory variables) hr2.
2) The improvement of using two explanatory variables instead of one $e_2$.
3) A combination of 1 and 2, f(hr2, $e_2$).

In this example we will use put a little more weight on the model goodness and use the following criteria for the selection order

$$e_2\left(h_{r2}\right)^2$$

We will hence build the tree, by selecting the submodels in the following order:

| Model | Dependent | Explanatory1 | Explanatory2 | $\varepsilon_2(h_{r2})^2$ |
|---|---|---|---|---|
| 1 | variable1 | variable5 | variable7 | 0.15882 |
| 3 | variable3 | variable2 | variable5 | 0.12731 |
| 2 | variable2 | variable3 | variable1 | 0.081439 |
| 4 | variable4 | variable3 | variable1 | 0.068131 |
| 5 | variable5 | variable3 | variable1 | 0.054113 |
| 6 | variable6 | variable4 | variable5 | 0.042599 |
| 8 | variable8 | variable3 | variable5 | 0.034196 |
| 7 | variable7 | variable1 | variable5 | 0.034196 |

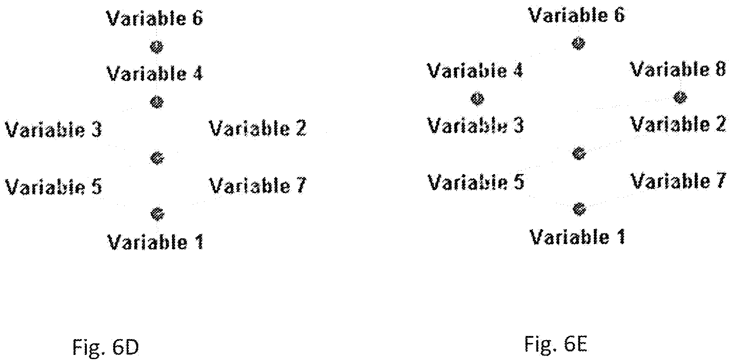

Next we will build the tree by connecting submodels in the order discussed above. We will start with the first model (corresponding to steps 42 and 44 in Figure 4) which is best model (in terms of entropy). The Model 1 describes the causal interrelations between variables variable1, variable5 and variable7. The Model 1 is added to the tree, such that after the first iteration, the tree consists of one model with three variables, is as shown in Figure 6A. In checking corresponding to step 46 in Figure 4, it is observed that all variables are not present in the tree. Thus, a second iteration is carried out (corresponding steps 42 and 44 in Figure 4), providing as a best model (in terms of entropy) the Model 3 with variables variable3, variable2 and variable5. The Model 3 describes the causal interrelations between variables variable3, variable2 and variable5. Since one of variables variable3, variable2 and variable5 is already in the tree, the Model 3 is added to the tree, such that Model 1 and Model 3 are connected through the variable variable5. Thus, after the second iteration, the tree consists of two models connected through variables, as shown in Figure 6B. In checking corresponding to step 46 in Figure 4, it is observed that all variables are not present in the tree. Thus, a third iteration is carried out (corresponding steps 42 and 44 in Figure 4), providing as a best model (in terms of entropy) the Model 2 with variables variable2, variable3 and variable1. Since all of variables variable3, variable2 and variable5 are already in the tree, the Model 2 is not added to the tree in order to avoid adding cycles. In checking corresponding to step 46 in Figure 4, it is observed that all variables are not present in the tree. Thus, a fourth iteration is carried out (corresponding steps 42 and 44 in Figure 4), providing as a best model (in terms of entropy) the Model 4 with variables variable4, variable3 and variable1. Since the second explanatory variable variable1 is already in the tree, Model 4 is added to the tree only with the dependent variable variable4 and the first explanatory variable variable3. Model 4 and Model 3 are connected through the variable variable3 as shown in Figure 6C. In checking corresponding to step 46 in Figure 4, it is observed that all variables are not present in the tree. Thus, a fifth iteration is carried out (corresponding steps 42 and 44 in Figure 4), providing as a best model (in terms of entropy) the Model 5 with variables variable5, variable3 and variable2. Since all of variables variable5, variable3 and variable2 are already in the tree, the Model 5 is not connected to the tree. The next, sixth iteration provides as a best model (in terms of entropy) the Model 6 with variables variable6, variable4 and variable5. Since the second explanatory variable variable5 is already in the tree, the Model 6 with only the dependent variable variable6 and the first explanatory variable variable4 is connected to the tree, as shown in Figure 6D. Next iteration step provides as a best model (in terms of entropy) the Model 7 with variables variable8, variable3 and variable4. Since the second explanatory variable variable4 is already in the tree, the Model 7 with only the dependent variable and the first explanatory variable variable4 is connected to the tree, as shown in Figure 6E. The Next iteration step provides as a best model (in terms of entropy) the Model 8 with variables variable7, variable1 and variable5. Since all of variables variable7, variable1 and variable5 are already in the tree, the Model 5 is not connected to the tree. In checking corresponding to step 46 in Figure 4, it is observed that all variables are present in the tree. The tree is not changed and the procedure ends.

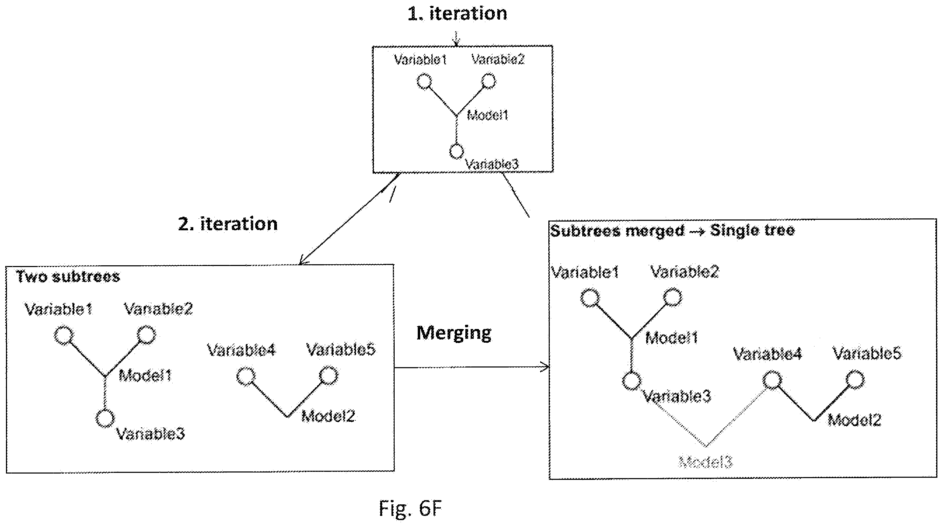

With the construction algorithm of the hierarchical structure of models, it is not guaranteed that all models and variables will end up in a single hierarchical structure. This is illustrated in the example of Figure 6F. The construction process includes two iteration rounds for constructing a tree for five variables 1, 2, 3, 4 and 5. The first iteration (corresponding to steps 42 and 44 in Figure 4) provides as a best model (in terms of entropy) the Model 1 with variables 1, 2 and 3. The Model 1 is added to the tree, such that after the first iteration, the tree consists of one model with three variables. The second iteration now provides as a best model (in terms of entropy) the Model 2 which describes the causal interrelations between variables 4 and 5. The Model 2 cannot be connected to the tree obtained in the first iteration, because there is no common variable. Thus, the second iteration results in two subtrees or hierarchical substructures, one having the Model 1 with variables 1, 2 and 3, and the other one having the Model 2 with variables 4 and 5.

Sometimes it is convenient to connect all hierarchical substructures, e.g. subtrees to a single hierarchical structure, e.g. tree. Two hierarchical structures may be connected such that the variable pair with the highest mutual correlation (e.g. information gain) is connected. In the example of Figure 6B, the two subtrees can merged into a single tree e.g. in the following way. First, the information gain between all variable pairs in the two subtrees is calculated:

| Model 1 | Model2 | Inf.Gain |
|---|---|---|
| Variable 1 | Variable 4 | 0.001 |
| Variable 2 | Variable 4 | 0.004 |
| Variable 3 | Variable 4 | 0.008 |
| Variable 1 | Variable 5 | 0.002 |
| Variable 2 | Variable 5 | 0.003 |
| Variable 3 | Variable 5 | 0.002 |

It can be seen that the single tree can be merged through variables 3 and 4 with a new model (Model3) because variables 3 and 4 have the highest Information gain, as illustrated in Figure 6F.

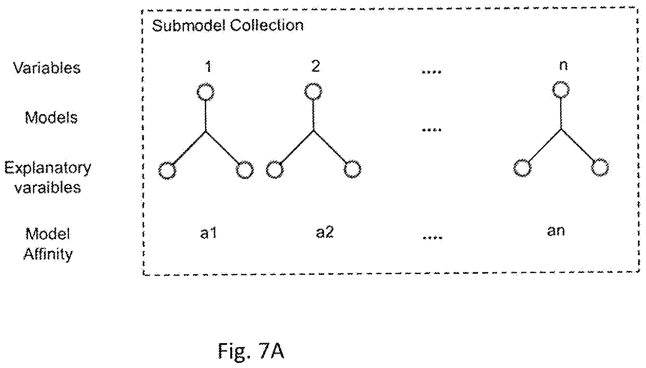

In an exemplary embodiment of the invention, in place of or in addition to building a general hierarchical structure of models which contains all variables, a collection of models may be built. An example of a model collection is shown in Figure 7A. In construction of the model collection, all variables 1, 2, ..., n are evaluated and modelled. For each variable 1, 2, ..., n, a model with one or two explanatory variables (or in special cases with more variables) is selected based on a statistical criterion, e.g. entropy. A measure of model goodness, such as the model affinity or relative entropy, may also be recorded for each model in the model collection.

A variable-specific hierarchical structure of models (e.g. a tree) may be dynamically built from the models (submodels) of the model collection. The variable-specific construction of hierarchical structure of models may start from a variable of interest provided by the operator through the interactive user interface. All models of the model collection with a connection to the variable of interest are considered in the construction of the hierarchical structure. All considered models that will preserve the hierarchical structure (e.g. tree), are attached to the hierarchical structure. Models are attached to the hierarchical structure in a specific order determined by the model affinity (relative entropy), for example. In other words, the model having the best relative entropy, for example, is added in each iteration round, in similar manner as in the method described with reference to Figure 4. The affinity of new variable in the hierarchical structure is affinity of previously selected variable multiplied by the affinity of currently attached model. The hierarchical structure is conserved, i.e. models that would add cycles (loops) to the hierarchical structure are rejected. Output of the construction is a variable-specific hierarchical structure (e.g. tree), i.e. network of models connected through variables.

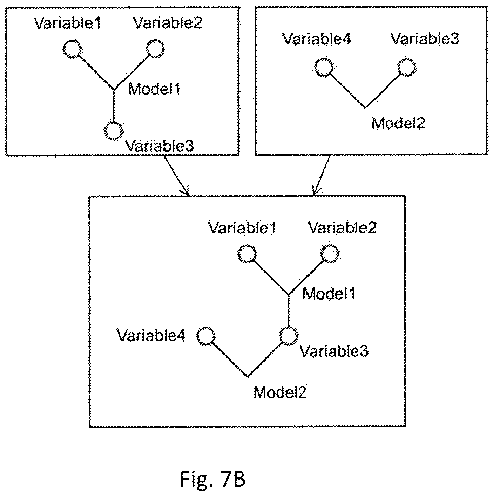

An example of a dynamic construction of a variable-specific tree is illustrated in Fig. 7B. Let us assume that the variable of interest = 3. Further, in the example the model collection contains two models, Model 1 and Model 2, which contain the variable of interest 3. They are connected into a tree through the variable 3, as shown in Figure 7B. In the next iteration round, we are searching for models containing variables 1, 2 and 4 which are the other variables present in the models selected in the first iteration round but not yet in the tree. Possible models found are connected to the present tree in a specific order, so that the best models are connected first (according to model affinity). The iteration and the tree construction are stopped when a predetermined criterion is met, such as that the model affinity (relative entropy) is below threshold or all variables are considered.

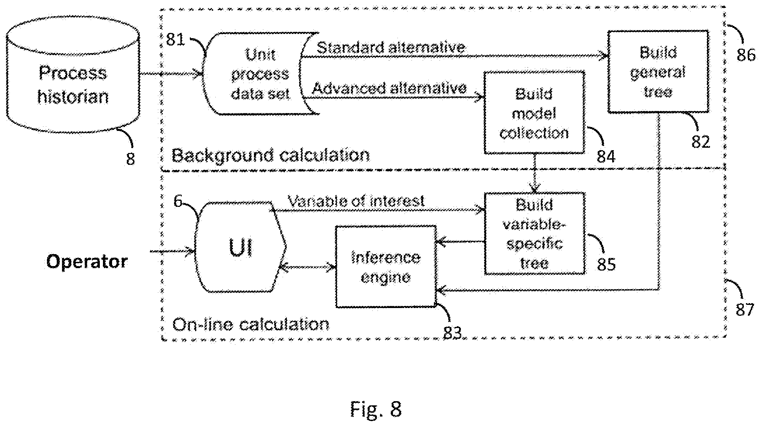

Figure 8 is an exemplary functional block diagram which illustrates functional blocks for implementing an interactive user interface with a selection and prediction system according to some exemplary embodiments of the invention. In Figure 8, the process historian database 8 and the automation system user interface (UI) 6 may correspond to those shown in Figure 1, when exemplary embodiments of the invention are applied in the environment illustrated in Figure 1. Other blocks 81-87 may be implemented, for example, in the variable selection and prediction block 10 shown in Figure 1. The block 81 may represent the data used in the variable selection and the tree construction described above with reference to Figures 3 and 4, for example. The build general tree block 82 may correspond to the tree construction methods described with reference to Figures 4, 5 and 5A, for example. The build model collection block 84 may correspond to the building of the model collection as described above with reference to Figure 6. The build variable-specific tree block 85 may correspond to the building of the model collection as described above with reference to Figure 7. In the example of Figure 8, the blocks 82 and 84-85 are illustrated as alternatives to each other but both of them may also be implemented in a same application. Also other implementations may be provided with a common feature that entropy is as a basis for tree structure construction, i.e. the way the models are attached to the tree is based on entropy.

In inference engine block 83 represents a prediction or exploring function that allows the operator to analyse and demonstrate the impact of one variable to another in tree. The operator may manually adjust the related variables shown on the interface: for example, by removing a related variable from analysis, by locking a related variable to an actual value, or by providing the favourable direction of change of the value of a related variable (up or down). The analysis may be shown in a numerical and/or graphical form at the user interface 6. After being satisfied with the result of the analysis, the operator may decide on which is the preferred parameter change(s) in order to overcome the problem in question or achieve the desired improvement, and then implement the corresponding change(s) on the real system via the same user interface 6. The tree is modified each time evidence has been presented, i.e. when the operator changes a value of one of the variables (called an evidence variable herein) in the tree through the user interface 6. Each model connected to the presented evidence variable may be modified. This may modify the distribution of the other variables in the model. These variables are treated as new evidence to the rest of the tree. Each time evidence is entered to a variable, the evidence will propagate through the entire tree in a single pass. Let us consider the inference of the tree shown in Figure 5A (outputted from the build general tree block 82, for example) or Figure 7 (outputted from the build variable-specific tree block 85, for example). Let us assume, evidence is entered in Variable 1. Consequently, the Model 1 is modified, which results in modification of variables 2 and 3. Then, the variable 3 is treated as new evidence, the Model 2 is modified, and the variable 4 will change.

As an example of an inference method a Bayesian inference may be employed for the models. More details about Bayesian inference can be found e.g. in Pearl, Judea (1982). "Reverend Bayes on inference engines: A distributed hierarchical approach", Proceedings of the Second National Conference on Artificial Intelligence. AAAI-82: Pittsburgh, PA. Menlo Park, California: AAAI Press. pp. 133-136.

According to an exemplary embodiment of the invention, the calculation may comprise two main stages 1) a background calculation stage 86, which makes required calculation-intensive preparations, and 2) an on-line stage 87, which involves rapid calculations. As the calculations, which are made in response to the operator's action during the analysis, can be performed more rapidly, a prompt user experience can be achieved. In the example shown in Figure 8, the building of the general hierarchical structure of models 82 and/or the building of the model collection 84 may be performed in the background calculation 86 over a long period of time and the results may be stored in a database, and the building of the variable-specific hierarchical structure 85 and/or the inference engine 83 may be performed as an online calculation 87 (in real time) based on the stored results of the background calculation.

As noted above, the tags in the historian database of the automation system may be used for purposes of the invention. However, there are usually too many tags in a system for one single statistical model, typically 1000's of tags. Usually, when the number of tags exceeds 100, the modelling phase will slow down.

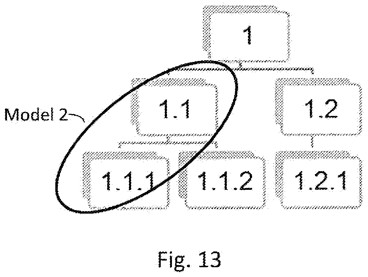

In an exemplary embodiment of the invention, several sub-models are used. One tag may exist in several submodels. The page hierarchy of an automation system user interface (UI) may be utilized as criteria to select tags of sub-models. This is based on an assumption that variables shown on same page can be assumed to be related by default. All tags on one page, as well as tags on a parent page (the page on higher level of the page hierarchy), may be included to the same model. As a result, the model size will be moderate since the number of variables shown on one page is limited. This approach is illustrated in Figure 13. The page hierarchy comprises the page 1 on the highest level, the pages 1.1 and 1.2 on the next lower level, and pages 1.1.1, 1.1.2 and 1.2.1 on the lowest level. In accordance with the above principle, for example the tags on the page 1.1.1 define a model (Model 2), which contains all tags on the pages 1.1.1 and 1.1. By merits of this aspect of the invention, a model tree for an automation system predictor can be built automatically. This is a cost effective approach, as only existing UI pages and history data is needed. All installation steps can be automated e.g. similar to the exemplary embodiments above: selection of variables for statistical models; dividing plant-wide statistical model to multiple sub-models; generation of statistical sub-models.

Exemplary embodiments of the invention may provide various advantages. The hierarchical structure can be efficiently built for large networks (more than 100 variables). The inference method is one-pass, i.e. it is fast even for large hierarchical structures.

Exemplary embodiments allow improved automation system user interfaces with one or more of following features: the existing user interface, used in daily operation, can be used; easy to use, since the user interface is familiar to the operator; same displays/views can be used for both a normal process operation and for deeper analysis, prediction and decision making; existing configuration data is sufficient; no manual configuration is needed; user can modify or lock any variable (input / output / parameter) which is part of the model; when the user modifies a value, he/she can observe changes made by the prediction without any additional fields (e.g. numbers). User's decision making is supported in various scenarios: what has possibly caused a problem; what is relevant in this particular situation; how to correct the situation, what-if experimentation; has this happened earlier; how to inform others, etc. As further potential advantages: opening the analysis tool from a target with point and click is possible; analysis tool readily shows what the system has concluded relevant; dependencies and their strengths are shown in a simple way; also a more thorough analysis is available if needed; the operator's verification in a particular situation is supported with curves and their manipulation methods; prediction and experimentation is supported with direct manipulation methods. Similar situations can be shown on timeline and they can be stepped (this could also be automatic and no button to start this is needed). Informing others with diary entry can be made easy with one click access and the situation may be automatically stored.

Let us now examine example embodiments of user interfaces according to the invention.

Example 1: Bleaching Plant

In this example, an exemplary interactive user interface according to the invention is used to maximize Kappa reduction in a bleaching plant.

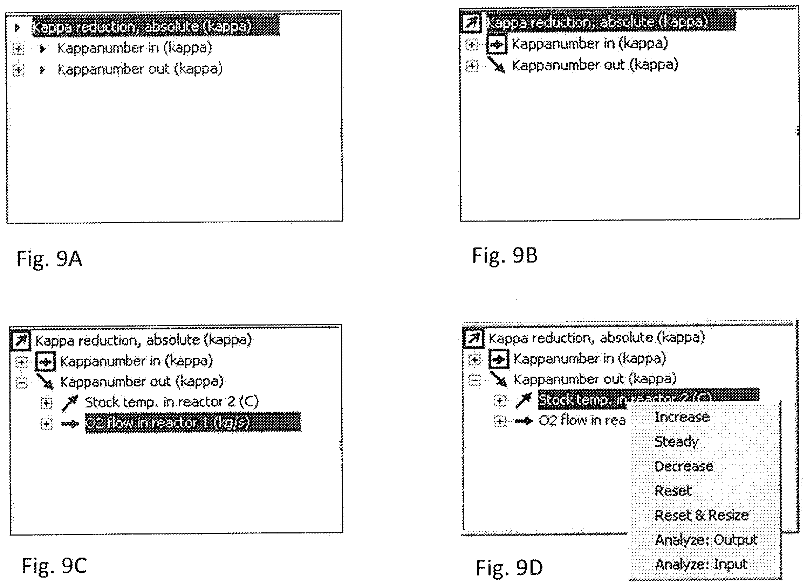

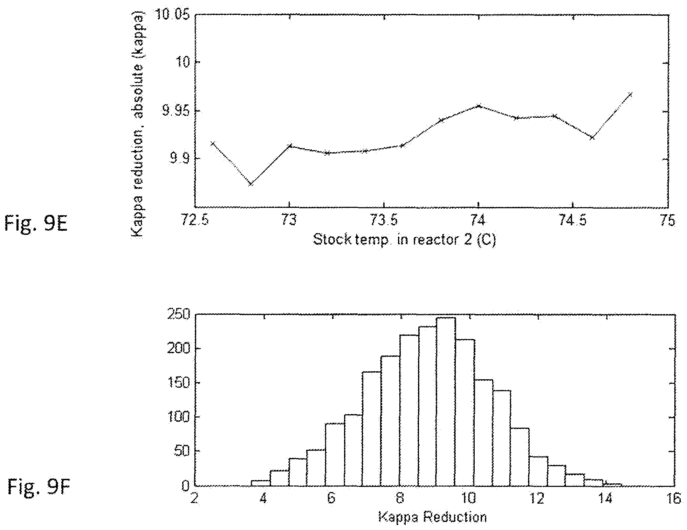

1. The operator selects Kappa Reduction as the variable of interest at the user interface. The analysis is opened from an initial tag. A number of tags, which are related to the initial tag, are automatically added to the analysis. In this example, the tree shown in Figure 9A appears. According to the model, "Kappa Reduction" depends on "Kappanumber In" and "Kappanumber Out", which is logical, since Kappa reduction is the difference between Kappanumber In and Out.
2. Operator knows that "Kappanumber In" cannot be modified and locks that value (illustrated by the horizontal arrow in a "box" in Figure 9B). Moreover, he tells that Kappa reduction should be increased (illustrated by the upwards arrow in a "box" in Figure 9B). As a result, the user interface indicates that "Kappanumber Out" needs to be reduced in these conditions (illustrated by the downwards arrow in Figure 9B).
3. Based on this information, the operator opens branch under "Kappanumber Out", which results in the user interface view shown in Figure 9C. From this view, the operator notices that "Stock temp. in reactor 2" should be increased in order to increase Kappa Reduction.
4. The operator clicks (e.g. with a right button of a mouse) at the variable "Stock temp. in reactor 2", and a context menu shown in Figure 9D opens. The operator selects "Analyze: Input" from the context menu, and the user interface view shown in Figure 9E opens.
5. In Figure 9E, the impact of "Stock temp. in reactor 2" is shown in an x-y plot. The conclusion is that Kappa reduction can slightly be modified by increasing the temperature.

Example 2: Examples of entropy calculations

Some numerical examples, which demonstrate the use of entropy in variable selection in connection of Example 1, are discussed below. Kappa number estimates the amount of chemicals required during bleaching of wood pulp to obtain a pulp with a given degree of whiteness. Since the amount of bleach needed is related to the lignin content of the pulp, the Kappa number can be used to monitor the effectiveness of the lignin-extraction phase of the pulping process. It is approximately proportional to the residual lignin content of the pulp. In the following example, the "Kappa reduction" is a variable of interest. Let us assume that trend data collected from a pulp mill will give histogram of the Kappa reduction shown in Figure 9F. As can be seen from the histogram, the Kappa reduction varies quite much, from 4 to 14 Kappa units. The histogram has been calculated for the Kappa values 4, 4.5, ..., 14, i.e. for 21 bins.

Entropy of a single variable can be calculated from its histogram as follows

$$h = -\sum_i p_i log_2(p_i)$$

wherein h = entropy and pi = the probability, which is estimated from the histogram by dividing it with total number of observations.

The histogram shown in Figure 9F can hence be used for this purpose, but usually histograms used for entropy calculation may have the following features:

1. The number of bins is usually quite low (3-6). With few bins we can speed up the calculations and usually get more reliable results, especially when we have small number of observations.
2. The bins are not necessarily equally spaced. Instead we may select the bins such that we get a similar number of observations in each bin. With this arrangement the initial entropy is maximized.

For simplicity reasons, we will use only 3 bins in this example. We will select the discretization intervals such that we will get the number of hits almost equally distributed between bins. This is illustrated in Table 1.

Table 1

Discretization of Kappa reduction, absolute (kappa)

| Bin | From | To | Nr_of_Hits |
|---|---|---|---|
| 1 | 3.664 | 8.0339 | 685 |
| 2 | 8.0394 | 9.6031 | 686 |
| 3 | 9.6046 | 14.456 | 686 |

The entropy (h0) of this distribution is

Entropy, h0 = 1.5849622

Entropy of a Variable with One Input

Let us first consider entropy of Kappa reduction with one input, i.e. one explanatory variable. Variable selection based on entropy may be done as follows. Each candidate input value is divided into bins in the same way as the output variable above, and for each input bin the corresponding output entropy is calculated. In our case where we use 3 bins, we will get 3 output distributions, and hence 3 entropy values. Since we only need one entropy value, we may calculate the weighted average of the individual entropy values

$$h = \frac{\sum_i n_h h_i}{\sum_i n_h}$$

The weighted entropy is compared to the original entropy value, i.e. h0. The input variable, which produces the largest change in output entropy, is the best explanatory variable. In order to easier understand the numerical value, we may use the relative change in entropy calculated as

$$h_r = \frac{h_0 - h}{h_0}$$

In our example, the best input variables in terms of relative entropy change are shown in Table 2.

Table 2

| Relative entr. | variable |
|---|---|
| 0.24444 | Kappanumber in (kappa) |
| 0.14327 | Reactor 1, alkali charge (kg/t) |
| 0.097889 | Kappanumber out (kappa) |
| 0.094388 | Reactor 1, oxygen charge (kg/t) |
| 0.088967 | O2 flow in reactor 1 (kg/s) |

Let us now study how the relative entropy may be calculated for the best explanatory variable distributions shown in Table 3.

Table 3

Discretization of Kappanumber in (kappa)

| Bin | From | To | Nr_of_Hits | output_Histogram | | | Output_Entropy |
|---|---|---|---|---|---|---|---|
| 1 | 19.487 | 23.659 | 685 | 506 | 155 | 24 | 0.97728 |
| 2 | 23.664 | 24.9 | 686 | 143 | 341 | 202 | 1.4922 |
| 3 | 24.9 | 29.355 | 686 | 36 | 190 | 460 | 1.1228 |

14

From the Output Entropy and Number of Hits, we may calculate the weighted average of entropy
Average entropy, havg = 1.1975
The relative entropy change (h0-havg)/h will then be
*Relative Entropy Change, hr = 0.2444*
In other words, with using this variable as an explanatory variable, we would be able to reduce the disorder by almost 25%.
Let us next consider adding a second explanatory variable. When the first explanatory variable has been selected, we can add more explanatory variables. It is however important to take into account the variables that already have been selected. Also here, we will test all input variables and calculate the relative change in entropy. The best explanatory variables and their entropy values, in addition to the already selected ones, are illustrated in Table 4.

Table 4

| | |
|---|---|
| *1 Kappanumber out (kappa)* | *0.56103* |
| *2 stock temp. in reactor 2 (C)* | *0.29191* |
| *3 Reactor 1, alkali charge (kg/t)* | *0.29022* |
| *4 Steam flow for stock warm-up (kg/s)* | *0.28861* |
| *5 O2 flow in reactor 2 (kg/s)* | *0.28737* |

As can be seen from Table 4, with two inputs, we can get over 50% reduction of disorder in data. Let us now study how the entropy value was calculated for the best inputs.
With 2 input signals, we will get 3x3=9 different input bin combinations. Consequently, we will have 9 Output Histograms and 9 Output Entropy values as illustrated in Table 5. As can be seen from Table 5, the Output Histogram is quite well organized with these two explanatory variables.

Table 5

| Input1Bin | Input2Bin | Nr_of_Hits | output_ Histogram | | | Output_Entropy |
|---|---|---|---|---|---|---|
| *1* | *1* | *231* | *73* | *134* | *24* | *1.3204* |
| *1* | *2* | *239* | *218* | *21* | *0* | *0.42931* |
| *1* | *3* | *215* | *215* | *0* | *0* | *0* |
| *2* | *1* | *275* | *0* | *78* | *197* | *0.86036* |
| *2* | *2* | *236* | *13* | *218* | *5* | *0.45392* |
| *2* | *3* | *175* | *130* | *45* | *0* | *0.8224* |
| *3* | *1* | *178* | *0* | *0* | *178* | *0* |
| *3* | *2* | *212* | *0* | *31* | *181* | *0.60032* |
| *3* | *3* | *296* | *36* | *159* | *101* | *1.3806* |

Also here the weighted average may be calculated to combine all entropy values to one single value. The weighted average of output entropy is
*havg = 0.6958*
and the relative entropy change hr = (h0-havg)/h0 is
Relative Entropy Change, hr = 0.561

Example 3: Power plant Boiler

In this example, an exemplary interactive user interface according to the invention is used for decision support, i.e. for selecting the right soot blowing instant in a power plant boiler.

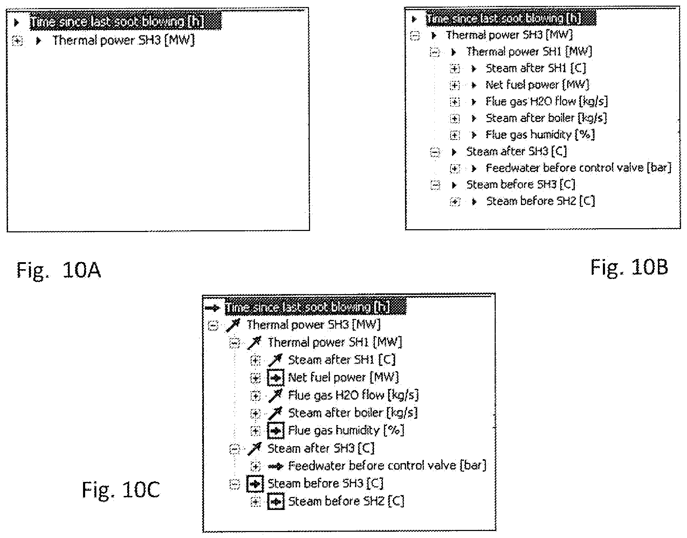

1. The operator selects "Time since last soot blowing [h]" as the variable of interest at the user interface. As result, the tree shown in Figure 10A appears. The variable "Time since last soot blowing" is a counter, which is reset after a soot blowing, otherwise it is increasing. According to the statistical model, the soot blowing primarily effects on a super heater SH3.
2. The operator analyzes the tree by opening more branches as illustrated in Figure 10B. At this point it is important to specify the analysis by eliminating variables that cannot be modified. The operator therefore locks some variables to their actual value, e.g. "Net fuel power", i.e. the amount of fuel that is fed to the boiler.

3. The tree with locked variables is shown in Figure 10C. By locking these variables, the analysis of the super heater SH3 will focus on the soot blowing, and eliminate all other influences on SH3.

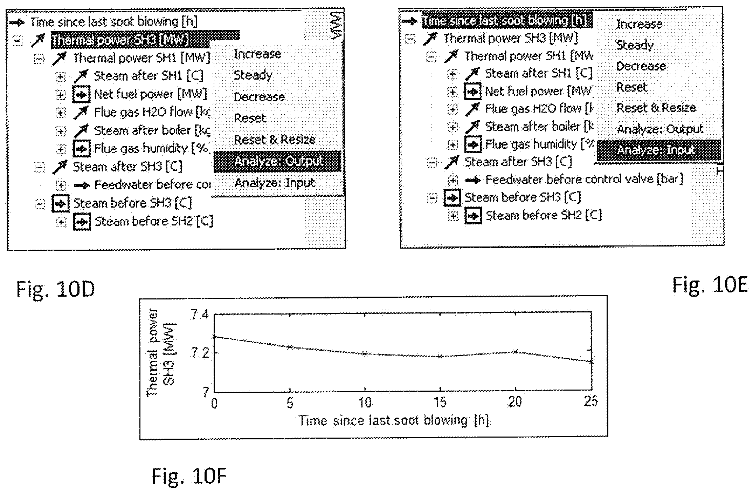

4. The operator then initiates a prediction. In the prediction, "Thermal power SH3 [MW]" is configured as an output variable (y-axis in plot). This is made by clicking (e.g. with a right button of a mouse) at the variable "Thermal power SH3 [MW]", such that a context menu shown in Figure 10D opens. The operator selects "Analyze Output" from the context menu. Similarly, "Time since last soot blowing" is configured as an input variable (x-axis in plot) by clicking (e.g. with a right button of a mouse) at the variable such that a context menu shown in Figure 10E opens. The operator then selects "Analyze Input" from the context menu. As a result, an x-y plot shown in Figure 10F is displayed.

5. Based on the x-y plot, the operator is able to justify the value and need of the soot blowing, and make the appropriate action in the real system.

Example 4: Power plant Boiler

In this example, an exemplary interactive user interface according to the invention is used for decision support, i.e. for analysing a temperature problem in a power plant boiler.

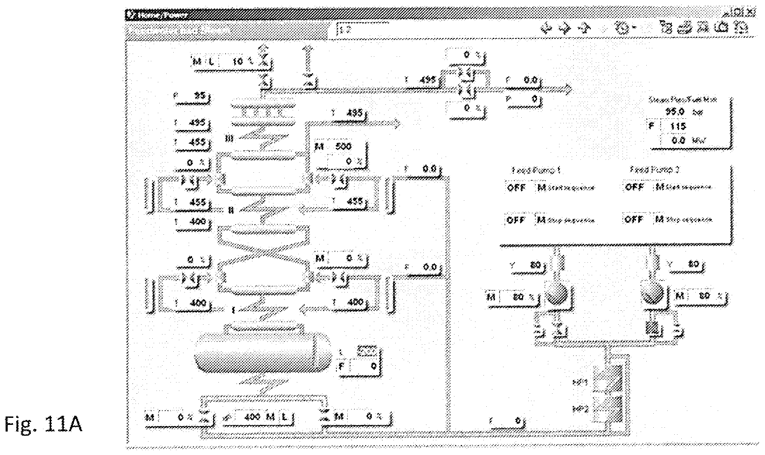

1. The operator has a normal process view at user interface, as illustrated in Figure 11A. There is a problem with Boiler temperature, -200. The operator tries to find the cause of the problem and clicks the Boiler temperature measurement field.

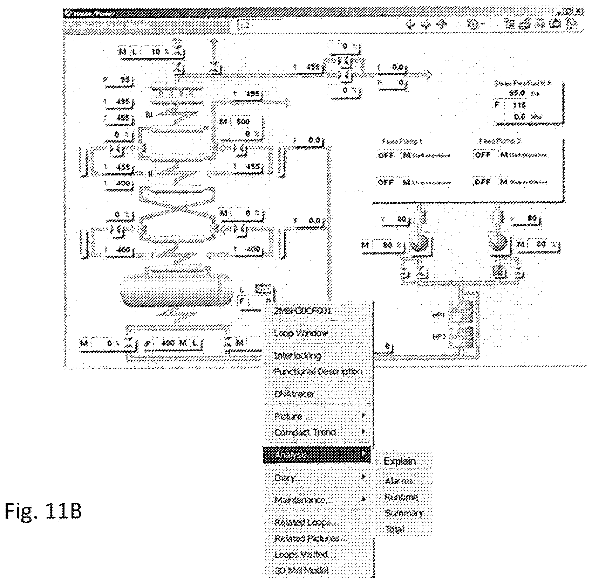

2. A context menu appears, as shown in Figure 11B. The operator selects Analysis. and then Explain.

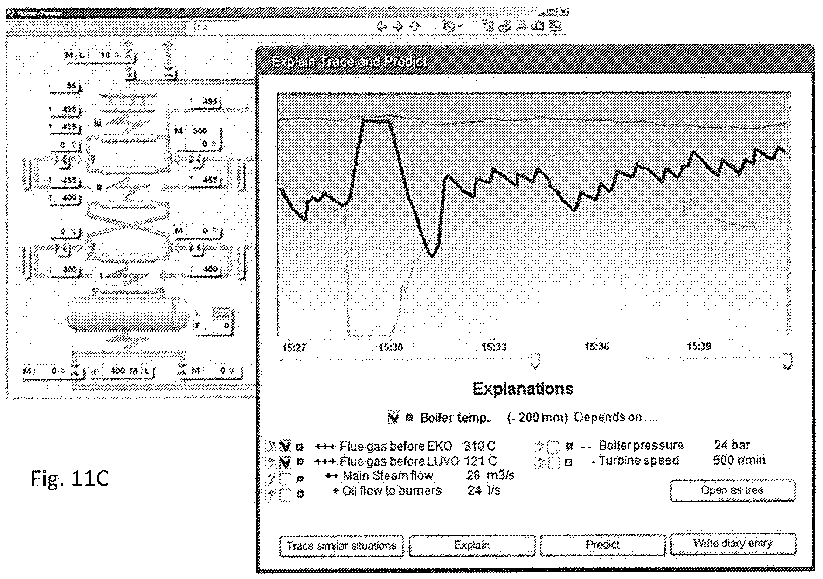

3. An analysis tool opens, as shown in Figure 11C. The measurements affecting the temperature are listed. The most affecting measurement s (+++) are shown as trends. The temperature trend is highlighted.

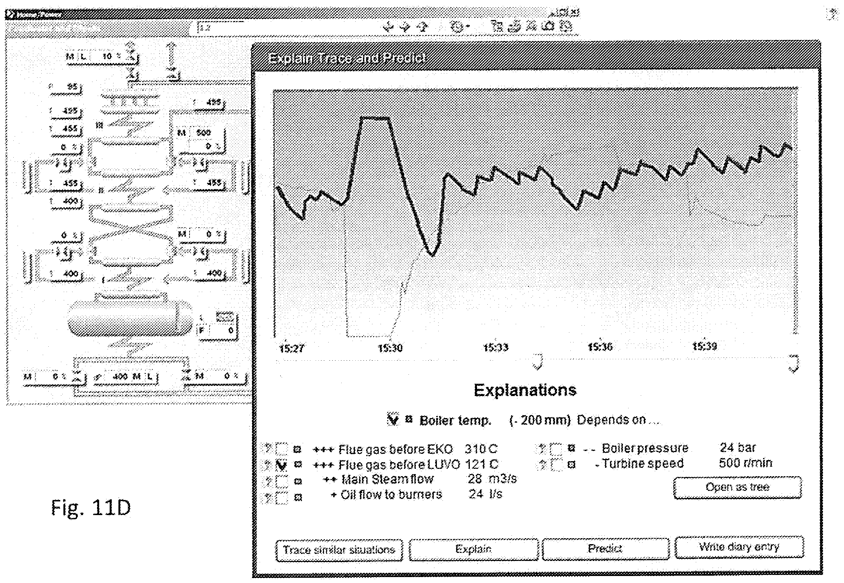

4. The operator notices one measurement has no influence. He removes it from trends view, thereby obtaining a view shown in Figure 11D. The operator clicks the "Open as tree" button.

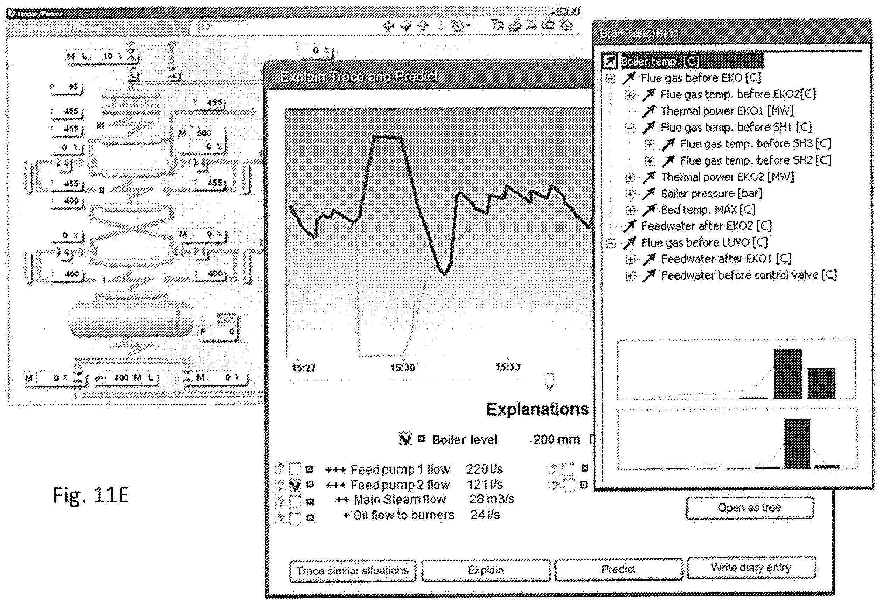

5. The measurements as tree are opened, as shown in Figure 11E. The operator is able to follow the tree deeper and try to find the cause of the problem, in a similar way as illustrated in the above examples. The operator can return to the previous view by closing the tree.

6. The operator concludes that the variable "Flue gas before LUVO" has caused the problem and stars starts planning actions to correct the situation. The operator clicks Predict button in the view shown in Figure 11D.

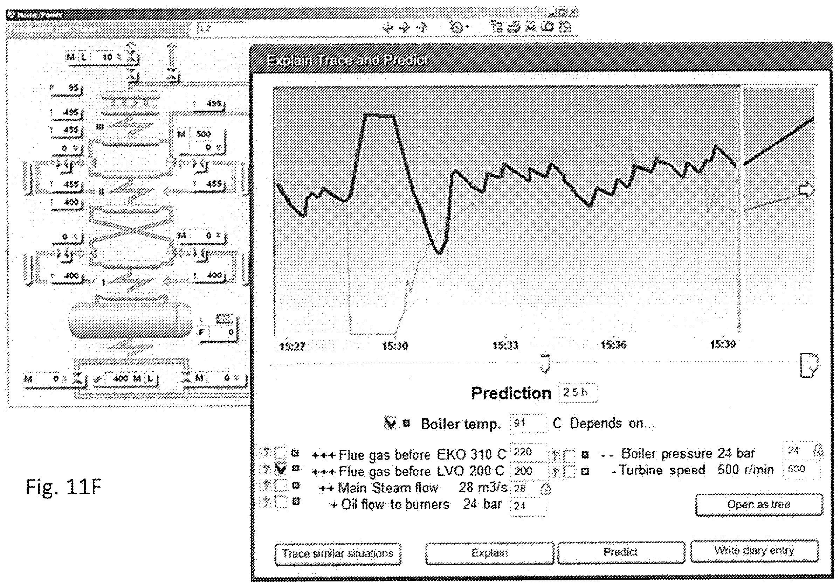

7. A section showing the future opens (the rectangular area on the right), as shown in Figure 11F. The operator locks a couple of measurements because they cannot be changed in practice. The operator drags one measurement up from the curve (indicated by an arrow) and sees other curves and values moving up or down. Alternatively, the operator can enter a target value directly to an appropriate tag field.

8. To continue the verification, the operator also wants to know if there are similar situations happened earlier. To analyse this, the operator crops by a rubber band zoom the relevant area from the curves and clicks "Trace similar situations" button.

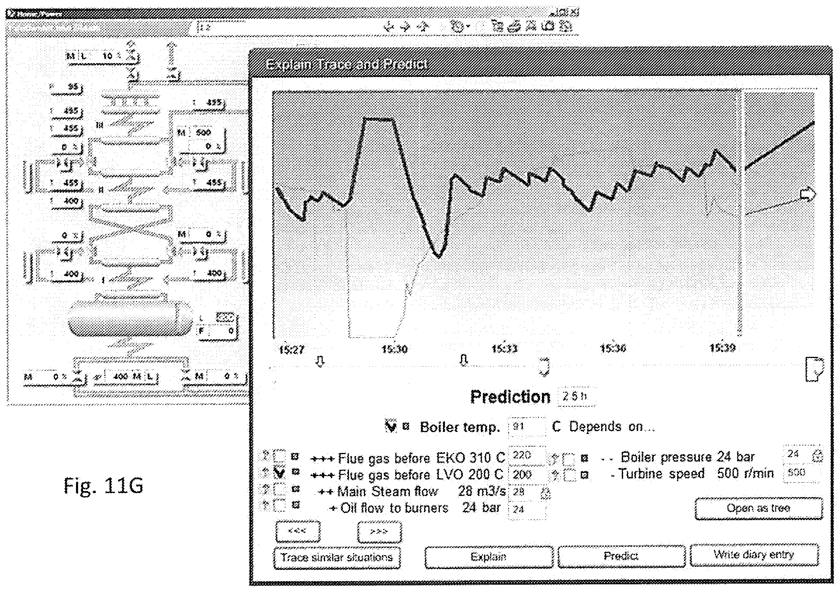

9. As a consequence, arrow buttons above the "Trace similar situations" button and markers on time line slider appear, as shown in Figure 11G. The operator clicks the markers or steps the situations with arrow buttons. The curves displayed are changed to the selected moment of time.

10. The operator decides that the situation is what he has concluded and wants to inform others. He clicks "Write diary entry" button. A diary is opened (not shown) and the analysis tool with related data and screenshots in analysis tool are automatically stored in the diary entry.

Example 5: Power plant Boiler

In this example, a further exemplary interactive user interface according to the invention is illustrated for decision support, i.e. for analysing a power plant boiler.

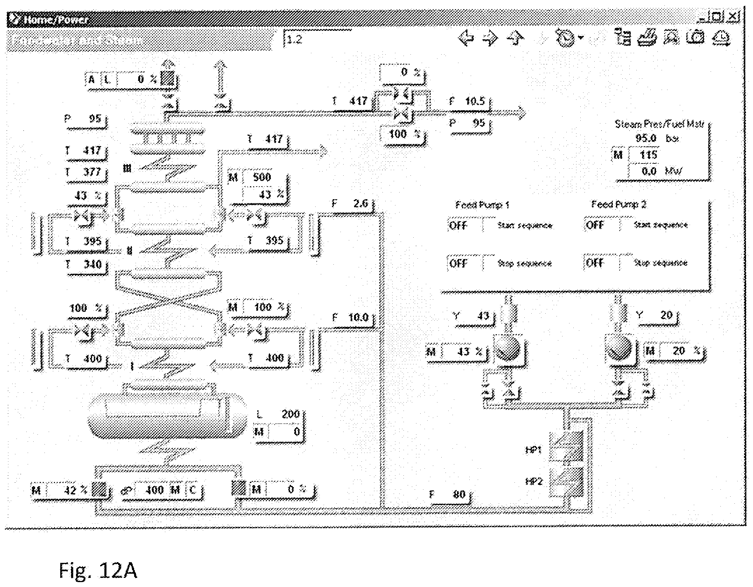

1. The operator has a normal process view at user interface, as illustrated in Figure 12A. The operator clicks a prediction button in a toolbar to start a prediction mode.

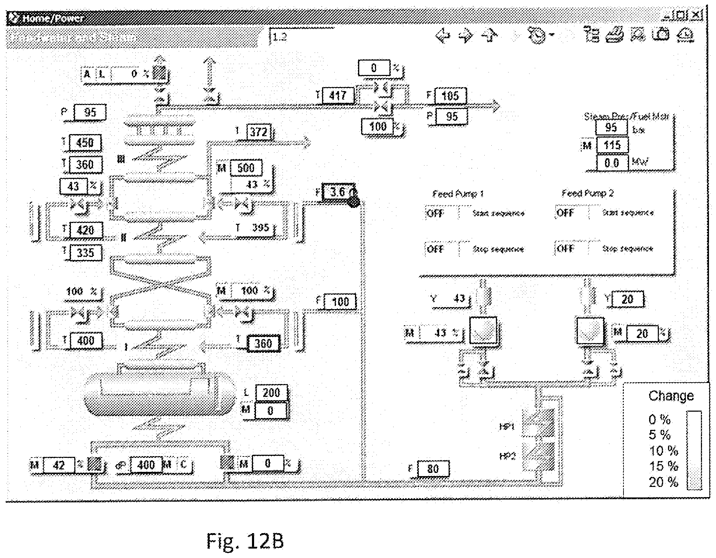

2. A prediction mode view appears which may be indicated by a coloured border, for example, or by some other suitable visual effect, as illustrated in Figure 12B. Although the IU layout shown in Figure 12A is not remarkably changed, the prediction view may include several special functions. For example, current tag values may be shown as modifiable, e.g. with white background. The operator may select tag to be edited, enter a new value directly to the field and press an Enter button, for example. The modified tag may be locked after the modification. Similarly, any other tag may be locked. The locked tag may be indicated by a suitable graphical effect or symbol, such as a lock symbol shown in Figure 12B. The values obtained from the prediction model are shown in the respective tag fields and the major changes caused by the modification may be indicated by a suitable graphical effect or symbol, e.g. they may highlighted with different magnitudes of a specific colour. The relationship between the magnitude of colour and the amount change is illustrated in the right-hand bottom corner of the UI view in Figure 12B. The operator may continue the prediction by changing further tags in the UI view.

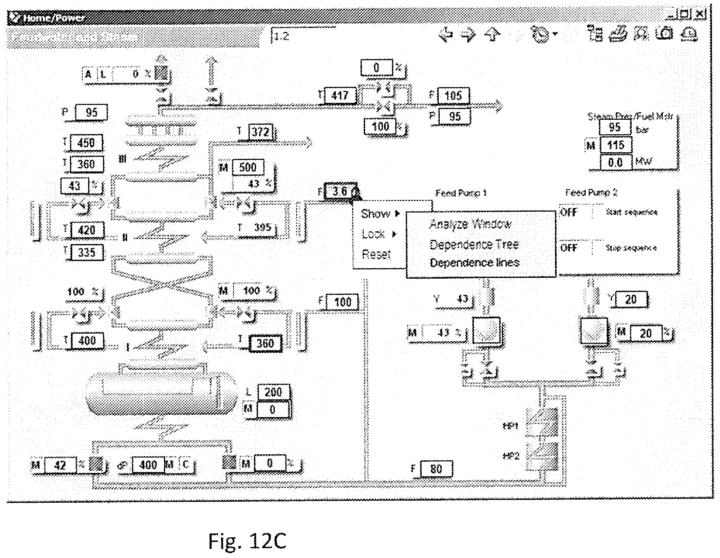

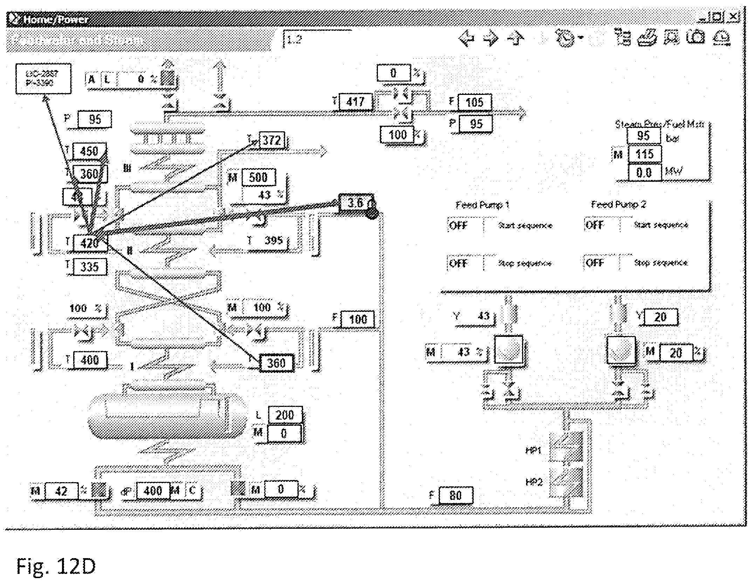

3. The operator may click mouse button on a tag in the UI view to open a context menu, as shown in Figure 12C. The first level of the context menu may contain buttons "Show", "Lock" and "Reset". The button "Show" may open a menu containing buttons "Analyze Window", "Dependence Tree" or "Dependence lines". The button "Lock" may open a menu containing buttons "Lock to current value", "Allow increase only" and "Allow decrease only" thereby allowing locking or unlocking variables, as well as an increase/decrease selection. The button "Reset" may unlock all variables and erase the dependence lines. In this example, the operator first selects "Show" and then "Dependence lines" in the opened menu. As a result, a view shown in Figure 12D may appear. In Figure 12D, lines connecting several tags show the dependencies around a selected tag. The strength and the direction of the dependency may be indicated, e.g. by the width of the line and the direction of the arrow, respectively.

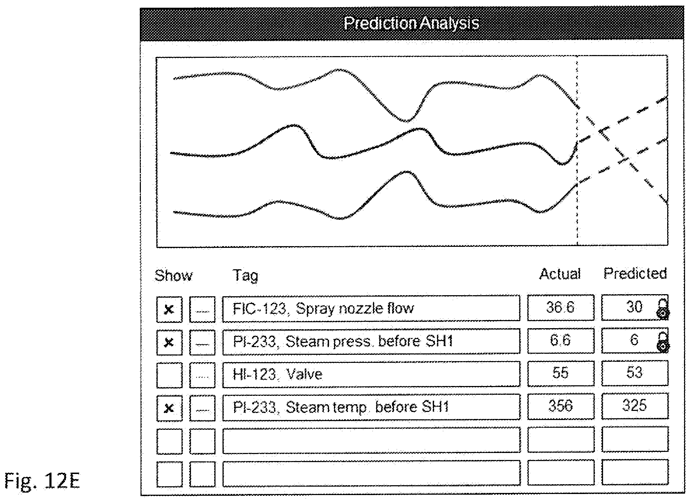

4. The operator may click the mouse button to open the context menu and select "Show" and "Predict analysis". As a result a UI view shown in Figure 12E may appear. The prediction analysis view may be similar to or modification of the view shown in Figure 10F. The analysis is opened from an initial tag. A number of tags, which are related to the initial tag, are automatically added to the analysis. With history trends the user can verify the dependencies in real life. A steady-state prediction is shown in the right-most section of the trends. The operator can drag prediction trends up and down. Alternatively, the operator may enter a target value directly to the appropriate "predicted" tag field. The operator may also drag and drop any tag from the view of Figure 12B to empty rows in the analysis view of Figure 12E.

5. The operator may click the mouse button to open the context menu and select "Show" and "Dependence tree". As a result a UI view shown in Figure 12F may appear. In the UI view, a tree structure is shown. The selected variable may be shown highlighted. Also, for selected variable, a probability distribution (a histogram) and optionally a reference distribution (a line) may be shown. Arrows may be used to indicate direction of changes. Boxes may be used to indicate locked variables.

The techniques described herein may be implemented by various means. For example, these techniques may be implemented in hardware (one or more devices), firmware (one or more devices), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) and executed by one or more processors. The data storage medium or the memory unit may be implemented within the processor or external to the processor, in which case it can be communicatively coupled to the processor via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

The description and the related figures are only intended to illustrate the principles of the present invention by means of examples. Various alternative embodiments, variations and changes are obvious to a person skilled in the art on the basis of this description. The present invention is not intended to be limited to the examples described herein but the invention may vary within the scope of the appended claims.

**Claims**

1. A method of operating an industrial process or a machine, comprising
   obtaining operating data from an operating historian database (8), said operating data containing a plurality of variables collected from an industrial process or machine (2) during operation,
   **characterized by**
   executing by non-real time calculation-intensive background processing (86) on a computing system over a longer period of time, in preparation for a real-time analysis, steps of:

   - preparing statistical models based on the obtained operating data, each of the statistical models describing non-linear relations between two or more variables among said plurality of variables, one of said two or more variables being a dependent variable and the other one or more of said two or more variables being an explanatory variable selected among said plurality of variables to best explain a variation in the dependent variable according to a predetermined statistical criterion, preferably a relative entropy,
   - organizing a plurality of operating variables into a hierarchical network of said prepared statistical models (82) according a predetermined statistical criterion, preferably a relative entropy, calculated for each of said prepared statistical models, in which hierarchical network (82) the statistical models are connected to each other through said variables of said statistical models such that a dependent variable of a statistical model of a hierarchically lower level according to the calculated statistical criterion thereof, preferably a relative entropy, is connected to the corresponding explanatory variable of a statistical model of a hierarchically higher level according to the calculated statistical criterion thereof, preferably a relative entropy, and storing said hierarchical network of statistical models (82) in a database or like,

executing, by real-time processing (83, 87) on a computer system of an automation system controlling the industrial process or machine, in response to operator actions the online analysis including steps of:

- receiving, via a graphical human-machine interface (6) of the automation system, a selection of one of said plurality of variables as a variable of interest for real-time analysis,
- automatically selecting, based on said stored hierarchical network of statistical models (82), among said plurality of variables at least one explanatory variable which is best to explain a variation in said variable of interest in terms of said statistical criterion, preferably a relative entropy, when said variable of interest is a dependent variable
- calculating based on said stored hierarchical network of statistical models and displaying on said graphical human-machine interface (6) dependence of a value of said variable of interest from a value of said at least one explanatory variable when said variable of interest is a dependent variable, and

controlling, through said graphical human-machine interface (6), said dependent variable in the industrial process or machine by adjusting one or more of said at least one explanatory variable based on information obtained from said online analysis.

2. A method of operating an industrial process or a machine, comprising
obtaining operating data from an operating historian database (8), said operating data containing a plurality of variables collected from an industrial process or machine (2) during operation,
**characterized by**
executing, by non-real time calculation-intensive background processing (86) on a computing system over a longer period of time, in preparation for a real-time analysis, steps of:

preparing a collection of statistical models (84) based on the obtained operating data, each of the statistical models describing non-linear relations between two or more variables among said plurality of variables, and storing said prepared collection of statistical models in a database,
executing, by real-time processing (83, 87) on a computer system of an automation system controlling the industrial process or machine, in response to operator actions an online analysis including steps of:

- receiving, via a graphical human-machine interface (6) of the automation, a selection of one of said plurality of variables as a variable of interest for real-time analysis,
- dynamically organizing variable-specific hierarchical network of statistical models (85) from the statistical models of the stored collection (84) according a predetermined statistical criterion, preferably a relative entropy, calculated for each of said prepared statistical models, for analysis of said variable of interest, in which variable-specific hierarchical presentation network the statistical models are connected to each other through said variables of said statistical models such that a dependent variable of a statistical model of a hierarchically lower level according to the calculated statistical criterion thereof, preferably a relative entropy, is connected to the corresponding explanatory variable of a statistical model of a hierarchically higher level according to the calculated statistical criterion thereof, preferably a relative entropy,
- automatically selecting, based on said variable specific hierarchical network of statistical models (85), among said plurality of variables of the operating data at least one explanatory variable which is best to explain a variation in said variable of interest in terms of a statistical criterion, preferably a relative entropy, when said variable of interest is a dependent variable, and
- calculating, based on said variable specific hierarchical network of statistical models, and displaying on said graphical human-machine interface (6) dependence of a value of said variable of interest from a value of said at least one explanatory variable when said explanatory variable is a dependent variable, and

controlling, through said graphical human-machine interface (6), said dependent variable in the industrial process or machine by adjusting one or more of said at least one explanatory variable based on information obtained from said online analysis.

3. A method according to claim 1 or 2, comprising displaying, at a graphical human-machine interface (6), a presentation of said variable of interest in function of said at least one explanatory variable.

4. A method according to any one of claims 1 to 3, comprising displaying, at said graphical human-machine interface (6), a hierarchical variable network having said variable of interest at a root and said at least one explanatory variable at a branch.

5. A method according to any one of claims 1 to 4, comprising enabling the operator to manually adjust, during the analysis at said graphical human-machine interface (6), said at least one explanatory variable by one or more of: removing one or more of said at least one explanatory variable from the analysis; locking one or more of said at least one explanatory variable to a certain value or range of values; and setting an allowed direction of change of one or more of said at least one explanatory variable and said variable of interest.

6. A method according to any one of claims 1 to 5, wherein said non-real time processing (86) comprises automatically building several hierarchical networks of statistical models, wherein variables to said statistical models are selected among said plurality of variables based on a page hierarchy of the graphical human-machine interface (6).

7. A method according to any one of claims 1 to 6, comprising
analyzing a predicted impact of said at least one explanatory variable and said variable of interest on each other using said hierarchical network or networks of statistical models,
showing the impact in a numerical and/or graphical form at the graphical human-machine interface (6).

8. A method according to claim 7, wherein said analyzing of said relationship information comprises displaying, at said graphical human-machine interface (6), a predicted value of the variable of interested, calculated with said hierarchical network or networks of statistical models, when said at least one explanatory variable varies in value.

9. A method according to claim 8, comprising
varying, via said graphical human-machine interface (6), one or more of said at least explanatory variables,
displaying, at said graphical human-machine interface (6), a predicted value or range of values of the process output variable calculated using said hierarchical network or networks of statistical models.

10. A method according to any one of claims 1 to 9, further comprising
selecting an explanatory variable that, together with already selected explanatory variable or variables, if any, best describe the selected process output variable in terms of said statistical criterion of the variable of interest, and sequentially repeating the selection step until a predetermined stopping criterion is met.

11. A method according to any one of claims 1 to 10, further comprises
calculating the statistical criterion of the variable of interest, calculating, for each of said plurality of variables, the impact between the respective variable alone and the variable of interest in terms of the statistical criterion of the variable of interest,
selecting as a primary explanatory variable the one of said plurality of variables that best describes the variable of interest in terms of the statistical criterion,
calculating, for each remaining one of said plurality of variables, the impact between the respective variable, together with already selected primary explanatory variable, and the variable of interest in terms of the statistical criterion,
selecting as a further explanatory variable the one of said plurality of variables, if any, that together with already selected primary explanatory variable, best describes the variable of interest in terms of the statistical criterion,
sequentially repeating the selection step until a predetermined stopping criterion is met.

12. A method according to any one of claims 1 to 11, wherein said statistical criterion is entropy or relative entropy.

13. A method according to any one of claims 1 to 12, wherein said statistical models comprise multi-dimensional histogram models.

14. A system comprising means for implementing steps of any one of method claims 1 to 13.

15. A computer program comprising program code for performing a method according to any one of claims 1 to 13 when said program is run on a computer.

16. A computer program product comprising program code means stored on a computer readable medium for performing a method according to any one of claims 1 to 13 when said program product is run on a computer.

**Patentansprüche**

1. Verfahren zum Betreiben eines Industrieprozesses oder einer Maschine, das Folgendes umfasst
Erhalten von Betriebsdaten aus einer Betriebshistorikerdatenbank (8), wobei die Betriebsdaten eine Vielzahl von Variablen enthalten, die während des Betriebs von einem Industrieprozess oder einer Maschine (2) gesammelt werden,
**gekennzeichnet durch**
Ausführen der folgenden Schritte durch eine berechnungsintensive Nicht-Echtzeit-Hintergrundverarbeitung (86) auf einem Datenverarbeitungssystem über eine längere Zeitperiode in Vorbereitung für eine Echtzeitanalyse:

- Vorbereiten von statistischen Modellen auf Basis der erhaltenen Betriebsdaten, wobei jedes der statistischen Modelle nichtlineare Beziehungen zwischen zwei oder mehr Variablen unter der Vielzahl von Variablen beschreibt, wobei eine der zwei oder mehr Variablen eine abhängige Variable ist und die andere eine oder die anderen mehreren der zwei oder mehreren Variablen eine erklärende Variable sind, die aus der Vielzahl von Variablen ausgewählt werden, um eine Schwankung der abhängigen Variablen gemäß einem vorbestimmten statistischen Kriterium, vorzugsweise einer relativen Entropie, am besten zu erklären,
- Organisieren einer Vielzahl von Betriebsvariablen in einem hierarchischen Netzwerk der vorbereiteten statistischen Modelle (82) gemäß einem vorbestimmten statistischen Kriterium, vorzugsweise einer relativen Entropie, das für jedes der vorbereiteten statistischen Modelle berechnet wird, wobei die statistischen Modelle im hierarchischen Netzwerk (82) über die Variablen der statistischen Modelle miteinander verbunden sind, derart, dass eine abhängige Variable eines statistischen Modells einer hierarchisch niedrigeren Ebene gemäß dem berechneten statistischen Kriterium davon, vorzugsweise einer relativen Entropie, mit der entsprechenden erklärenden Variablen eines statistischen Modells einer hierarchisch höheren Ebene gemäß dem berechneten statistischen Kriterium davon, vorzugsweise einer relativen Entropie, verbunden ist, und Speichern des hierarchischen Netzwerks der statistischen Modelle (82) in einer Datenbank oder Ähnlichem,

mittels Echtzeitverarbeitung (83, 87) auf einem Computersystem eines Automatisierungssystems, das den Industrieprozess oder die Maschine steuert, in Reaktion auf Bedieneraktionen Ausführen der Onlineanalyse, die die folgenden Schritte beinhaltet:

- Empfangen einer Auswahl von einer der Vielzahl von Variablen als einer Variablen, die für die Echtzeitanalyse von Interesse ist, via eine grafische Mensch-Maschine-Schnittstelle (6) des Automatisierungssystems,
- automatisches Auswählen von mindestens einer erklärenden Variablen, die eine Schwankung der Variablen von Interesse hinsichtlich des statistischen Kriteriums, vorzugsweise einer relativen Entropie, am besten erklärt, auf Basis des gespeicherten hierarchischen Netzwerks von statistischen Modellen (82) aus der Vielzahl von Variablen, wenn die Variable von Interesse eine abhängige Variable ist
- Berechnen einer Abhängigkeit eines Wertes der Variablen von Interesse von einem Wert der mindestens einen erklärenden Variablen auf Basis des gespeicherten hierarchischen Netzwerks von statistischen Modellen und Anzeigen derselben auf der grafischen Mensch-Maschine-Schnittstelle (6), wenn die Variable von Interesse eine abhängige Variable ist, und
Steuern der abhängigen Variablen im Industrieprozess oder in der Maschine durch Anpassen von einer oder mehreren der mindestens einen erklärenden Variablen durch die grafische Mensch-Maschine-Schnittstelle (6) auf Basis von Informationen, die aus der Onlineanalyse erhalten werden.

2. Verfahren zum Betreiben eines Industrieprozesses oder einer Maschine, das Folgendes umfasst
Erhalten von Betriebsdaten aus einer Betriebshistorikerdatenbank (8), wobei die Betriebsdaten eine Vielzahl von Variablen enthalten, die während des Betriebs von einem Industrieprozess oder einer Maschine (2) gesammelt werden,
**gekennzeichnet durch**
Ausführen der folgenden Schritte durch eine berechnungsintensive Nicht-Echtzeit-Hintergrundverarbeitung (86) auf einem Datenverarbeitungssystem über eine längere Zeitperiode in Vorbereitung für eine Echtzeitanalyse:

Vorbereiten einer Sammlung von statistischen Modellen (84) auf Basis der erhaltenen Betriebsdaten, wobei jedes der statistischen Modelle nichtlineare Beziehungen zwischen zwei oder mehr Variablen unter der Vielzahl von Variablen beschreibt, und Speichern der vorbereiteten Sammlung von statistischen Modellen in einer Datenbank,

mittels Echtzeitverarbeitung (83, 87) auf einem Computersystem eines Automatisierungssystems, das den Industrieprozess oder die Maschine steuert, in Reaktion auf Bedieneraktionen Ausführen einer Onlineanalyse, die die folgenden Schritte beinhaltet:

- Empfangen einer Auswahl von einer der Vielzahl von Variablen als einer Variablen, die für die Echtzeitanalyse von Interesse ist, via eine grafische Mensch-Maschine-Schnittstelle (6) der Automatisierung,
- dynamisches Organisieren eines variablenspezifischen hierarchischen Netzwerks von statistischen Modellen (85) aus den statistischen Modellen der gespeicherten Sammlung (84) gemäß einem vorbestimmten statistischen Kriterium, vorzugsweise einer relativen Entropie, das für jedes der vorbereiteten statistischen Modelle berechnet wird, zur Analyse der Variablen von Interesse, wobei die statistischen Modelle im variablenspezifischen hierarchischen Präsentationsnetzwerk über die Variablen der statistischen Modelle miteinander verbunden sind, derart, dass eine abhängige Variable eines statistischen Modells einer hierarchisch niedrigeren Ebene gemäß dem berechneten statistischen Kriterium davon, vorzugsweise einer relativen Entropie, mit der entsprechenden erklärenden Variablen eines statistischen Modells einer hierarchisch höheren Ebene gemäß dem berechneten statistischen Kriterium davon, vorzugsweise einer relativen Entropie, verbunden ist,
- automatisches Auswählen von mindestens einer erklärenden Variablen, die eine Schwankung der Variablen von Interesse hinsichtlich eines statistischen Kriteriums, vorzugsweise einer relativen Entropie, am besten erklärt, auf Basis des veriablenspezifischen hierarchischen Netzwerks von statistischen Modellen (85) aus der Vielzahl von Variablen der Betriebsdaten, wenn die Variable von Interesse eine abhängige Variable ist, und
- Berechnen einer Abhängigkeit eines Wertes der Variablen von Interesse von einem Wert der mindestens einen erklärenden Variablen auf Basis des variablenspezifischen hierarchischen Netzwerks von statistischen Modellen und Anzeigen derselben auf der grafischen Mensch-Maschine-Schnittstelle (6), wenn die erklärende Variable eine abhängige Variable ist, und

Steuern der abhängigen Variablen im Industrieprozess oder in der Maschine durch Anpassen von einer oder mehreren der mindestens einen erklärenden Variablen durch die grafische Mensch-Maschine-Schnittstelle (6) auf Basis von Informationen, die aus der Onlineanalyse erhalten werden.

3. Verfahren nach Anspruch 1 oder 2, das das Anzeigen einer Präsentation der Variablen von Interesse abhängig von der mindestens einen erklärenden Variablen auf einer grafischen Mensch-Maschine-Schnittstelle (6) umfasst.

4. Verfahren nach einem der Ansprüche 1 bis 3, das das Anzeigen eines hierarchischen variablen Netzwerks, in dem sich die Variable von Interesse an einer Wurzel und die mindestens eine erklärende Variable an einem Zweig befindet, auf der grafischen Mensch-Maschine-Schnittstelle (6) umfasst.

5. Verfahren nach einem der Ansprüche 1 bis 4, das umfasst, dass es dem Bediener möglich ist, während der Analyse auf der grafischen Mensch-Maschine-Schnittstelle (6) die mindestens eine erklärende Variable durch eines oder mehreres von Folgendem manuell anzupassen: Entfernen von einer oder mehreren der mindestens einen erklärenden Variablen aus der Analyse; Sperren von einer oder mehreren der mindestens einen erklärenden Variablen auf einem bestimmten Wert oder Wertebereich und Einstellen einer erlaubten Änderungsrichtung von einer oder mehreren der mindestens einen erklärenden Variablen und der Variablen von Interesse.

6. Verfahren nach einem der Ansprüche 1 bis 5, wobei die Nichtechtzeitverarbeitung (86) das automatische Aufbauen von mehreren hierarchischen Netzwerken von statistischen Modellen umfasst, wobei Variablen für die statistischen Modelle auf Basis einer Seitenhierarchie der grafischen Mensch-Maschine-Schnittstelle (6) aus der Vielzahl von Variablen ausgewählt werden.

7. Verfahren nach einem der Ansprüche 1 bis 6, das Folgendes umfasst
Analysieren einer vorausgesagten gegenseitigen Beeinträchtigung der mindestens einen erklärenden Variablen und der Variablen von Interesse unter Verwendung des hierarchischen Netzwerks oder der hierarchischen Netzwerke von statistischen Modellen,
Zeigen der Beeinträchtigung in numerischer und/oder grafischer Form auf der grafischen Mensch-Maschine-Schnittstelle (6).

8. Verfahren nach Anspruch 7, wobei das Analysieren der Beziehungsinformationen das Anzeigen eines vorausgesagten Wertes der Variablen von interessiert, der mit dem hierarchischen Netzwerk oder den hierarchischen Netzwerken von statistischen Modellen berechnet wird, auf der grafischen Mensch-Maschine-Schnittstelle (6), wenn der Wert der mindestens einen erklärenden Variablen variiert, umfasst.

9. Verfahren nach Anspruch 8, das Folgendes umfasst
Variieren von einer oder mehreren der mindestens erklärenden Variablen via die grafische Mensch-Maschine-Schnittstelle (6),
Anzeigen eines vorausgesagten Wertes oder Bereichs von Werten der Prozessausgabevariablen, der unter Verwendung des hierarchischen Netzwerks oder der hierarchischen Netzwerke von statistischen Modellen berechnet wird, auf der grafischen Mensch-Maschine-Schnittstelle (6).

10. Verfahren nach einem der Ansprüche 1 bis 9, das ferner Folgendes umfasst
Auswählen einer erklärenden Variablen, die zusammen mit einer oder mehreren bereits ausgewählten erklärenden Variablen, soweit zutreffend, die ausgewählte Prozessausgabevariable hinsichtlich des statistischen Kriteriums der Variablen von Interesse am besten beschreibt, und
sequenzielles Wiederholen des Auswahlschritts, bis ein vorbestimmtes Abbruchkriterium erfüllt ist.

11. Verfahren nach einem der Ansprüche 1 bis 10 umfasst ferner Folgendes
Berechnen des statistischen Kriteriums der Variablen von Interesse,
Berechnen der Beeinträchtigung zwischen der jeweiligen Variablen allein und der Variablen von Interesse hinsichtlich des statistischen Kriteriums der Variablen von Interesse für jede der Vielzahl von Variablen,
Auswählen der einen der Vielzahl von Variablen, die die Variable von Interesse hinsichtlich des statistischen Kriteriums am besten beschreibt, als eine primäre erklärende Variable,
Berechnen der Beeinträchtigung zwischen der jeweiligen Variablen, zusammen mit bereits ausgewählten primären erklärenden Variablen, und der Variablen von Interesse hinsichtlich des statistischen Kriteriums für jede verbleibende der Vielzahl von Variablen,
Auswählen der einen der Vielzahl von Variablen, sofern zutreffend, die zusammen mit bereits ausgewählten primären erklärenden Variablen die Variable von Interesse hinsichtlich des statistischen Kriteriums am besten beschreibt, als eine weitere erklärende Variable,
sequenzielles Wiederholen des Auswahlschritts, bis ein vorbestimmtes Abbruchkriterium erfüllt ist.

12. Verfahren nach einem der Ansprüche 1 bis 11, wobei das statistische Kriterium Entropie oder relative Entropie ist.

13. Verfahren nach einem der Ansprüche 1 bis 12, wobei die statistischen Modelle mehrdimensionale Histogrammmodelle umfassen.

14. System, das Mittel zum Implementieren von Schritten gemäß einem der Verfahrensansprüche 1 bis 13 umfasst.

15. Computerprogramm, das Programmcode zum Durchführen eines Verfahrens nach einem der Ansprüche 1 bis 13, wenn das Programm auf einem Computer ausgeführt wird, umfasst.

16. Computerprogrammprodukt, das Programmcodemittel, die auf einem computerlesbaren Medium gespeichert sind, zum Durchführen eines Verfahrens nach einem der Ansprüche 1 bis 13, wenn das Programmprodukt auf einem Computer ausgeführt wird, umfasst.

**Revendications**

1. Procédé de fonctionnement d'un processus industriel ou d'une machine, comprenant
l'obtention de données de fonctionnement à partir d'une base de données d'historique de fonctionnement (8), lesdites données de fonctionnement contenant une pluralité de variables collectées à partir d'un processus industriel ou d'une machine (2) au cours du fonctionnement,
**caractérisé par**
l'exécution, par un traitement d'arrière-plan intensif en calcul non en temps réel (86), sur un système informatique sur une plus longue durée, en préparation d'une analyse en temps réel, des étapes de :

- la préparation de modèles statistiques basés sur les données de fonctionnement obtenues, chacun des modèles statistiques décrivant des relations non linéaires entre deux variables ou plus parmi ladite pluralité de variables, l'une desdites deux variables ou plus étant une variable dépendante et l'autre une ou plusieurs desdites deux variables ou plus étant une variable explicative sélectionnée parmi ladite pluralité de variables pour expliquer au mieux une variation de la variable dépendante en fonction d'un critère statistique prédéterminé, de préférence une entropie relative,

- l'organisation d'une pluralité de variables de fonctionnement en un réseau hiérarchique desdits modèles statistiques préparés (82) en fonction d'un critère statistique prédéterminé, de préférence une entropie relative, calculé pour chacun desdits modèles statistiques préparés, dans lequel réseau hiérarchique (82) les modèles statistiques sont reliés les uns aux autres au travers desdites variables desdits modèles statistiques de sorte qu'une variable dépendante d'un modèle statistique d'un niveau hiérarchiquement inférieur en fonction de son critère statistique calculé, de préférence une entropie relative, est reliée à la variable explicative correspondante d'un modèle statistique d'un niveau hiérarchiquement supérieur en fonction de son critère statistique calculé, de préférence une entropie relative, et le stockage dudit réseau hiérarchique de modèles statistiques (82) dans une base de données ou analogue,

l'exécution, par un traitement en temps réel (83, 87) sur un système informatique d'un système d'automatisation commandant le processus industriel ou la machine, en réponse à des actions d'opérateur, de l'analyse en ligne incluant les étapes de :

- la réception, via une interface graphique homme-machine (6) du système d'automatisation, d'une sélection de l'une de ladite pluralité de variables en tant que variable d'intérêt pour une analyse en temps réel,
- la sélection automatique, sur la base dudit réseau hiérarchique stocké de modèles statistiques (82), parmi ladite pluralité de variables, d'au moins une variable explicative qui permet d'expliquer au mieux une variation de ladite variable d'intérêt en termes dudit critère statistique, de préférence une entropie relative, lorsque ladite variable d'intérêt est une variable dépendante
- le calcul, sur la base dudit réseau hiérarchique stocké de modèles statistiques, et l'affichage, sur ladite interface graphique homme-machine (6), de la dépendance d'une valeur de ladite variable d'intérêt par rapport à une valeur de ladite au moins une variable explicative lorsque ladite variable d'intérêt est une variable dépendante, et

la commande, au travers de ladite interface graphique homme-machine (6), de ladite variable dépendante dans le processus industriel ou la machine par l'ajustement d'une ou de plusieurs de ladite au moins une variable explicative sur la base d'informations obtenues à partir de ladite analyse en ligne.

2. Procédé de fonctionnement d'un processus industriel ou d'une machine, comprenant

l'obtention de données de fonctionnement à partir d'une base de données d'historique de fonctionnement (8), lesdites données de fonctionnement contenant une pluralité de variables collectées à partir d'un processus industriel ou d'une machine (2) au cours du fonctionnement,

**caractérisé par**

l'exécution, par un traitement d'arrière-plan intensif en calcul non en temps réel (86), sur un système informatique sur une plus longue durée, en préparation d'une analyse en temps réel, des étapes de :

la préparation d'une collection de modèles statistiques (84) basés sur les données de fonctionnement obtenues, chacun des modèles statistiques décrivant des relations non linéaires entre deux variables ou plus parmi ladite pluralité de variables, et le stockage de ladite collection préparée de modèles statistiques dans une base de données,

l'exécution, par un traitement en temps réel (83, 87) sur un système informatique d'un système d'automatisation commandant le processus industriel ou la machine, en réponse à des actions d'opérateur, d'une analyse en ligne incluant les étapes de :

- la réception, via une interface graphique homme-machine (6) de l'automatisation, d'une sélection de l'une de ladite pluralité de variables en tant que variable d'intérêt pour une analyse en temps réel,
- l'organisation, de manière dynamique, d'un réseau hiérarchique spécifique à une variable de modèles statistiques (85) à partir des modèles statistiques de la collection stockée (84) en fonction d'un critère statistique prédéterminé, de préférence une entropie relative, calculé pour chacun desdits modèles statistiques préparés, pour l'analyse de ladite variable d'intérêt, dans lequel réseau de présentation hiérarchique spécifique à une variable, les modèles statistiques sont reliés les uns aux autres au travers desdites variables desdits modèles statistiques de sorte qu'une variable dépendante d'un modèle statistique d'un niveau hiérarchiquement inférieur en fonction de son critère statistique calculé, de préférence une entropie relative, est reliée à la variable explicative correspondante d'un modèle statistique d'un niveau hiérarchiquement supérieur en fonction de son critère statistique calculé, de préférence une entropie relative,

- la sélection, de manière automatique, sur la base dudit réseau hiérarchique spécifique à une variable de modèles statistiques (85), parmi ladite pluralité de variables des données de fonctionnement, d'au moins une variable explicative qui permet d'expliquer au mieux une variation de ladite variable d'intérêt en termes d'un critère statistique, de préférence une entropie relative, lorsque ladite variable d'intérêt est une variable dépendante, et

- le calcul, sur la base dudit réseau hiérarchique spécifique à une variable de modèles statistiques, et l'affichage, sur ladite interface graphique homme-machine (6) de la dépendance, d'une valeur de ladite variable d'intérêt par rapport à une valeur de ladite au moins une variable explicative lorsque ladite variable explicative est une variable dépendante, et

la commande, au travers de ladite interface graphique homme-machine (6), de ladite variable dépendante dans le processus industriel ou la machine par l'ajustement d'une ou de plusieurs de ladite au moins une variable explicative sur la base d'informations obtenues à partir de ladite analyse en ligne.

3. Procédé selon la revendication 1 ou 2, comprenant l'affichage, au niveau d'une interface graphique homme-machine (6), d'une présentation de ladite variable d'intérêt en fonction de ladite au moins une variable explicative.

4. Procédé selon l'une quelconque des revendications 1 à 3, comprenant l'affichage, au niveau de ladite interface graphique homme-machine (6), d'un réseau de variables hiérarchique ayant ladite variable d'intérêt au niveau d'une racine et ladite au moins une variable explicative au niveau d'une branche.

5. Procédé selon l'une quelconque des revendications 1 à 4, comprenant la permission pour l'opérateur d'ajuster manuellement, au cours de l'analyse au niveau de ladite interface graphique homme-machine (6), ladite au moins une variable explicative par l'un ou plusieurs parmi : l'élimination d'une ou de plusieurs de ladite au moins une variable explicative à partir de l'analyse ; le verrouillage d'une ou plusieurs de ladite au moins une variable explicative sur une certaine valeur ou plage de valeurs ; et la définition d'une direction de changement autorisée d'une ou de plusieurs de ladite au moins une variable explicative et ladite variable d'intérêt.

6. Procédé selon l'une quelconque des revendications 1 à 5, dans lequel ledit traitement non en temps réel (86) comprend la construction, de manière automatique, de plusieurs réseaux hiérarchiques de modèles statistiques, dans lequel des variables pour lesdits modèles statistiques sont sélectionnées parmi ladite pluralité de variables sur la base d'une hiérarchie de pages de l'interface graphique homme-machine (6) .

7. Procédé selon l'une quelconque des revendications 1 à 6, comprenant
l'analyse d'un impact prédit de ladite au moins une variable explicative et de ladite variable d'intérêt l'une sur l'autre à l'aide dudit ou desdits réseau(x) hiérarchique(s) de modèles statistiques,
la représentation de l'impact sous une forme numérique et/ou graphique au niveau de l'interface graphique homme-machine (6).

8. Procédé selon la revendication 7, dans lequel ladite analyse desdites informations de relation comprend l'affichage, au niveau de ladite interface graphique homme-machine (6), d'une valeur prédite de la variable d'intérêt, calculée avec ledit ou les réseau(x) hiérarchique(s) de modèles statistiques, lorsque ladite au moins une variable explicative varie en valeur.

9. Procédé selon la revendication 8, comprenant
la variation, via ladite interface graphique homme-machine (6), de l'une ou de plusieurs desdites au moins variables explicatives,
l'affichage, au niveau de ladite interface graphique homme-machine (6), d'une valeur ou plage de valeurs prédite de la variable de sortie de processus calculée à l'aide dudit ou desdits réseau(x) hiérarchique(s) de modèles statistiques.

10. Procédé selon l'une quelconque des revendications 1 à 9, comprenant en outre
la sélection d'une variable explicative qui, conjointement avec une ou des variable(s) explicative (s) déjà sélectionnée (s), le cas échéant, décrit au mieux la variable de sortie de processus sélectionnée en termes dudit critère statistique de la variable d'intérêt, et
la répétition, de manière séquentielle, de l'étape de sélection jusqu'à ce qu'un critère d'arrêt prédéterminé soit satisfait.

11. Procédé selon l'une quelconque des revendications 1 à 10, qui comprend en outre
le calcul du critère statistique de la variable d'intérêt,
le calcul, pour chacune de ladite pluralité de variables, de l'impact entre la variable respective seule et la variable d'intérêt en termes du critère statistique de la variable d'intérêt,
la sélection, en tant que variable explicative primaire, de la variable de ladite pluralité de variables qui décrit au mieux la variable d'intérêt en termes du critère statistique,
le calcul, pour chaque variable restante de ladite pluralité de variables, de l'impact entre la variable respective, conjointement avec la variable explicative primaire déjà sélectionnée, et la variable d'intérêt en termes du critère statistique,
la sélection, en tant que variable explicative supplémentaire, de la variable de ladite pluralité de variables, le cas échéant, qui, conjointement avec la variable explicative primaire déjà sélectionnée, décrit au mieux la variable d'intérêt en termes du critère statistique,
la répétition, de manière séquentielle, de l'étape de sélection jusqu'à ce qu'un critère d'arrêt prédéterminé soit satisfait.

12. Procédé selon l'une quelconque des revendications 1 à 11, dans lequel ledit critère statistique est l'entropie ou l'entropie relative.

13. Procédé selon l'une quelconque des revendications 1 à 12, dans lequel lesdits modèles statistiques comprennent des modèles d'histogramme multidimensionnels.

14. Système comprenant des moyens pour mettre en œuvre les étapes selon l'une quelconque des revendications de procédé 1 à 13.

15. Programme d'ordinateur comprenant un code de programme pour réaliser un procédé selon l'une quelconque des revendications 1 à 13 lorsque ledit programme est lancé sur un ordinateur.

16. Produit programme d'ordinateur comprenant des moyens de code de programme stockés sur un support lisible par ordinateur pour réaliser un procédé selon l'une quelconque des revendications 1 à 13 lorsque ledit produit programme est lancé sur un ordinateur.

Fig. 1

y(k) Measurements
u(k) Controls
r(k) Actions and setpoints

Fig. 2

Selecting a variable of interest according to the
problem or improvement to be analyzed
20

Automatically determining and showing on the
user interface the variables related to the
variable of interest
22

Deselection / Locking / Specification of the
related variables
24

Prediction
26

Implementation
28

EP 2 791 745 B1

```
        ┌─────────────────────────────────────┐
        │    Select the variable of interest   │
        └─────────────────────────────────────┘
                          │              30
                          ▼
        ┌─────────────────────────────────────┐
        │  Test all candidate variables, i.e.  │
        │  explanatory variables, in raw data  │
        └─────────────────────────────────────┘
                          │              32
                          ▼
        ┌─────────────────────────────────────┐
        │    Add the best candicate variable   │
        │  with the largest relative entropy to│
        │            a variable list           │
        └─────────────────────────────────────┘
                          │              34
                          ▼
                       ◇ Stop? ◇        36
             No   ◇             ◇
                   ◇           ◇
                       Yes
                          ▼
        ┌─────────────────────────────────────┐
        │   Output a list of explanatory       │
        │  variables that describe the         │
        │  variation in the (dependent)   38   │
        │       variable of interest           │
        └─────────────────────────────────────┘
```

Fig. 3

EP 2 791 745 B1

```
┌─────────────────────────────────┐
│      Start with empty tree.      │
│     Input matrix of raw data     │ 40
└─────────────────────────────────┘
                 │
                 ▼
┌─────────────────────────────────┐
│    Model each remaining variable │
│    with 1-2 explanatory variables│ 42
└─────────────────────────────────┘
                 │
                 ▼
┌─────────────────────────────────┐
│      Add the best model with the │
│  largest relative entropy to the tree │ 44
└─────────────────────────────────┘
                 │
                 ▼
              ◇ All
        No   variables      46
      ◀──────  in tree?
                 │ Yes
                 ▼
┌─────────────────────────────────┐
│    Output the tree. Optionally,  │
│    merge multiple trees into a   │ 48
│           single tree            │
└─────────────────────────────────┘
```

Fig. 4

Fig. 5A

Fig. 5B

Fig. 5C

Variable 5      Variable 7            Variable 3          Variable 2

Variable 5          Variable 7

Variable 1              Variable 1

Fig. 6A                                                    Fig. 6B

Variable 4

Variable 3          Variable 2

Variable 5          Variable 7

Fig. 6C          Variable 1

EP 2 791 745 B1

Fig. 6D

Fig. 6E

EP 2 791 745 B1

Fig. 6F

EP 2 791 745 B1

EP 2 791 745 B1

Submodel Collection

Variables         1         2      ....      n

Models                                              ....

Explanatory
varaibles

Model
Affinity        a1        a2     ....     an

Fig. 7A

Fig. 7B

EP 2 791 745 B1

Fig. 8

EP 2 791 745 B1

Fig. 9A

Fig. 9B

Fig. 9C

Fig. 9D

Fig. 9E

Fig. 9F

EP 2 791 745 B1

Fig. 10A

Fig. 10B

Fig. 10C

39

Fig. 10E

Fig. 10D

Fig. 10F

EP 2 791 745 B1

Fig. 11A

41

Fig. 11B

Fig. 11C

EP 2 791 745 B1

Fig. 11D

Fig. 11E

Fig. 11F

Fig. 11G

Fig. 12A

Fig. 12B

Fig. 12C

Fig. 12D

Fig. 12E

**Prediction Analysis**

| Show | | Tag | Actual | Predicted |
|---|---|---|---|---|
| ✗ | — | FIC-123, Spray nozzle flow | 36.6 | 30 🔒 |
| ✗ | — | PI-233, Steam press. before SH1 | 6.6 | 6 🔒 |
| | ⋯ | HI-123, Valve | 55 | 53 |
| ✗ | — | PI-233, Steam temp. before SH1 | 356 | 325 |
| | | | | |
| | | | | |

EP 2 791 745 B1

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2002177909 A
- WO 2008040845 A
- US 2007288105 A

### Non-patent literature cited in the description

- **MATS FRIMAN ; HARRI HAPPONEN.** Managing Adaptive Process Monitoring: New Tools and Case Examples. *Proceedings of the 15th Mediterranean Conference on Control and Automation,* 27 July 2007
- Reverend Bayes on inference engines: A distributed hierarchical approach. **PEARL, JUDEA.** Proceedings of the Second National Conference on Artificial Intelligence. AAAI Press, 1982, vol. AAAI-82, 133-136